# EUROPÄISCHE PATENTANMELDUNG

(11) **EP 2 835 531 A2**
(43) Veröffentlichungstag der Anmeldung: **11.02.2015**
(21) Anmeldenummer: 14179555.9
(22) Anmeldetag: 01.08.2014
(51) Int. Cl.: F04B 1/20, F03C 1/06

(54) **Hydrostatische Axialkolbenmaschine in Schrägachsenbauweise**

(30) Priorität: 05.08.2013 DE 102013108406
(71) Anmelder: Linde Hydraulics GmbH & Co. KG, 63743 Aschaffenburg (DE)
(72) Erfinder: Bergmann, Martin, 64850 Schaafheim (DE)
(74) Vertreter: Geirhos, Johann

(57) **Zusammenfassung**

Die Erfindung betrifft hydrostatische Axialkolbenmaschine (1) in Schrägachsenbauweise mit einer um eine Rotationsachse (Rₜ) drehbar angeordneten Triebwelle (4), die mit einem Triebflansch (3) versehen ist, und einer um eine Rotationsachse (R_{z}) drehbar angeordneten Zylindertrommel (7), wobei die Zylindertrommel (7) mit mehreren konzentrisch zur Rotationsachse (R_{z}) der Zylindertrommel (7) angeordneten Kolbenausnehmungen (8) versehen ist, in denen jeweils ein Kolben (10) längsverschiebbar angeordnet ist, wobei die Kolben (10) an dem Triebflansch (3) gelenkig befestigt sind, und wobei zwischen der Triebwelle (4) und der Zylindertrommel (7) ein Mitnahmegelenk (30) zur drehsynchronen Drehung der Zylindertrommel (7) und der Triebwelle (4) angeordnet ist. Das Mitnahmegelenk (30) ist als Kegelstrahl-Halbwalzengelenk (31) ausgebildet.

## Beschreibung

Die Erfindung betrifft eine hydrostatische Axialkolbenmaschine in Schrägachsenbauweise mit einer um eine Rotationsachse drehbar angeordneten Triebwelle, die mit einem Triebflansch versehen ist, und einer um eine Rotationsachse drehbar angeordneten Zylindertrommel, wobei die Zylindertrommel mit mehreren konzentrisch zur Rotationsachse der Zylindertrommel angeordneten Kolbenausnehmungen versehen ist, in denen jeweils ein Kolben längsverschiebbar angeordnet ist, wobei die Kolben an dem Triebflansch gelenkig befestigt sind, und wobei zwischen der Triebwelle und der Zylindertrommel ein Mitnahmegelenk zur drehsynchronen Drehung der Zylindertrommel und der Triebwelle angeordnet ist.

Bei hydrostatischen Axialkolbenmaschinen in Schrägachsenbauweise sind die in der Zylindertrommel längsverschiebbar angeordneten Kolben in der Regel mittels eines Kugelgelenks an dem Triebflansch einer Triebwelle befestigt. Die Kolbenkräfte stützen sich hierbei über die Kolben auf dem an der Triebwelle befindlichen Triebflansch ab und erzeugen ein Drehmoment. Bei Axialkolbenmaschinen in Schrägachsenbauweise erfolgt prinzipbedingt bei einer Drehung keine Mitnahme der Zylindertrommel mit den darin angeordneten Kolben. Für die Mitnahme der Zylindertrommel ist eine zusätzliche Einrichtung erforderlich.

Gewünscht ist, dass während einer Drehung der Triebwelle eine möglichst synchrone Mitnahme und Drehung der Zylindertrommel erfolgt. Bei einer ungleichförmigen Drehung der Zylindertrommel würde durch das Trägheitsmoment der Zylindertrommel mit den darin angeordneten Kolben ein ungleichförmiges Drehmoment an der Triebwelle entstehen. Ein ungleichförmiges Drehmoment kann zu fertigungskritischen Bauteilbelastungen der Axialkolbenmaschine führen. Zudem können aufgrund eines ungleichförmigen Drehmoments in einem mit der Axialkolbenmaschine versehenen Antriebsstrang unerwünschte Geräusche auftreten.

Um eine synchrone Drehung der Zylindertrommel und der Triebwelle zu erzielen, werden bei bekannten Axialkolbenmaschinen in Schrägachsenbauweise Gleichlaufgelenke als Mitnahmegelenk zur drehsynchronen Mitnahme der Zylindertrommel eingesetzt. Bei bekannten Axialkolbenmaschinen in Schrägachsenbauweise werden hierzu Gleichlaufgelenke nach dem Rzeppa-Prinzip, bei denen als Kugeln ausgeführte Wälzkörper, die in nutenförmigen Laufbahnen des Triebflansches und der Zylindertrommel laufen, das Drehmoment zwischen Triebwelle und Zylindertrommel zur Mitnahme der Zylindertrommel übertragen, oder nach dem Tripoden-Prinzip eingesetzt, bei dem zwischen der Zylindertrommel und der Triebwelle eine Koppelwelle angeordnet ist, die an den beiden Wellenenden mit fingerartigen Lagerzapfen versehen ist, an den Wälzkörper in Form von Rollen gelagert sind, die in entsprechenden Laufbahnen an dem Triebflansch und der Zylindertrommel laufen und das Drehmoment zur Mitnahme der Zylindertrommel übertragen. Eine Axialkolbenmaschinen in Schrägachsenbauweise mit einem Gleichlaufgelenke nach dem Rzeppa-Prinzip ist beispielsweise aus der DE 38 00 031 C2 bekannt. Derartige Gleichlaufgelenke nach dem Rzeppa-Prinzip oder nach dem Tripoden-Prinzip ermöglichen zwar eine drehsynchrone Mitnahme der Zylindertrommel, verursachen jedoch aufgrund der aufwändig herzustellenden Laufbahnen für die Kugeln bzw. Rollen einen hohen Bauaufwand. Zudem können bei entsprechende hohen zu übertragenden Drehmomenten bei der Mitnahme der Zylindertrommel an den als Kugeln oder Rollen ausgebildeten Wälzkörpern bei derartigen Gleichlaufgelenken hohe Hertzsche Pressungen auftreten, die eine tiefe Aufhärtung der Laufbahnen erfordern. Bei der erforderlichen Aufhärtung der mit den Laufbahnen für die Wälzkörper versehenen Bauteile durch eine geeignete Wärmebehandlung tritt eine Maßänderung an den gehärteten und mit den Laufbahnen versehenen Bauteilen auf, die eine aufwändige mechanische Nacharbeit der gehärteten Bauteilen nach sich zieht, so dass derartige Gleichlaufgelenke nach dem Rzeppa-Prinzip oder Tripoden-Prinzip zu einem hohen Herstellaufwand der Schrägachsenmaschine führen.

Zudem ist es bereits bei Axialkolbenmaschinen in Schrägachsenbauweise bekannt, die Mitnahme der Zylindertrommel über Pleuel durchzuführen, die jeweils zumindest teilweise im Kolben angeordnet sind und mit dem Kolben sowie dem Triebflansch durch ein Kugelgelenk gelenkig verbunden sind. Die Pleuel stützen sich hierbei zur Mitnahme der Zylindertrommel an den Kolbeninnenwänden der Kolbenausnehmungen der Zylindertrommel ab. Eine derartige Axialkolbenmaschinen in Schrägachsenbauweise mit einer Mitnahme der Zylindertrommel über Pleuel ist aus der DE 28 05 492 C2 bekannt.

Weiterhin ist es bereits bei Axialkolbenmaschinen in Schrägachsenbauweise bekannt, die Mitnahme der Zylindertrommel direkt über die in den Kolbenausnehmungen der Zylindertrommel längsverschiebbaren Kolben durchzuführen, die hierzu kegelförmig ausgebildet sind und mit einer keglig geformten Mantelfläche versehen sind. Die Kolben stützen sich hierbei zur Mitnahme der Zylindertrommel mit den kegligen Abschnitten an den Innenwänden der Kolbenausnehmungen der Zylindertrommel ab. Eine derartige Axialkolbenmaschinen in Schrägachsenbauweise mit einer Mitnahme der Zylindertrommel über keglig ausgeführte Kolben ist aus der DE 10 2009 005 390 A1 bekannt.

Bei Axialkolbenmaschinen in Schrägachsenbauweise mit einer Mitnahme der Zylindertrommel über Pleuel oder über die Kolben erfolgt jedoch aufgrund der begrenzten Anzahl von Kolben bzw. Pleuel keine exakte drehsynchrone Mitnahme der Zylindertrommel und es tritt eine Ungleichförmigkeit der Drehbewegung bei der Mitnahme der Zylindertrommel auf. Ein weiterer Nachteil von Axialkolbenmaschinen in Schrägachsenbauweise mit einer Mitnahme der Zylindertrommel über Pleuel oder die Kolben besteht darin, dass bei einer Ausführung der Axialkolbenmaschine als Verstellmaschine beim Zurückschwenken der Zylindertrommel auf ein kleineres Verdrängervolumen ein Losespiel zwischen der Zylindertrommel und der Triebwelle entsteht. Mit dem auftretenden Losespiel entsteht eine unerwünschte Verdrehung zwischen der Triebwelle und der Zylindertrommel, welche zu einer zusätzlichen tangentialen Ausrichtung der Pleuel bzw. der kegelig ausgeführten Kolben führt. Mit der tangentiale Ausrichtung der Pleuel bzw. der kegelig ausgeführten Kolben entstehen tangentiale Kraftkomponenten, die zu einem hohen Blinddrehmoment führen, die über die Pleuel bzw. Kolben zu übertragen sind, so dass hohe Bauteilbelastungen hinsichtlich der Festigkeit und der Tribologie entstehen.

Bei bekannten Axialkolbenmaschinen in Schrägachsenbauweise besteht ein weiterer Nachteil darin, dass die Triebwelle nicht durch die Axialkolbenmaschine hindurchgeführt werden kann, da die Gleichlaufgelenke nach dem Rzeppa-Prinzip oder nach dem Tripoden-Prinzip im Schnittpunkt der Rotationsache der Zylindertrommel mit der Rotationsachse der Triebwelle angeordnet sind bzw. bei einer Mitnahme der Zylindertrommel über Pleuel oder über die Kolben die Zylindertrommel auf einem konzentrisch zur Rotationachse der Zylindertrommel angeordneten Mittelzapfen gelagert ist. Bei bekannten Axialkolbenmaschinen in Schrägachsenbauweise kann somit bei der Ausführung als Motor der Abtrieb des Drehmoment bzw. bei der Ausführung als Pumpe der Antrieb durch ein Drehmoment nur an einer Seite erfolgen, wodurch die Anwendungen der Axialkolbenmaschine eingeschränkt werden. Für Anwendungen einer Schrägachsenmaschine, bei denen ein Abtrieb nach beiden Seiten oder ein Drehmoment für einen weiteren Verbraucher durch die Axialkolbenmaschine hindurchgeführt werden soll, sind bei bekannten Axialkolbenmaschinen in Schrägachsenbauweise zusätzliche Bauteile, beispielsweise Verteilergetriebe erforderlich, um eine universelle Anwendung der Axialkolbenmaschine zu ermöglichen.

Bei bekannten Axialkolbenmaschinen in Schrägachsenbauweise, bei denen ein Gleichlaufgelenk nach dem Rzeppa-Prinzip oder nach dem Tripoden-Prinzip zur Mitnahme der Zylindertrommel eingesetzt wird oder die Mitnahme der Zylindertrommel über Pleuel oder über die Kolben erfolgt, ist weiterhin nachteilig, dass die mit dem Triebflansch versehene Lagerung der Triebwelle in einem Gehäuse der Axialkolbenmaschine fliegend ausgeführt werden muss, wodurch die Baulänge der Axialkolbenmaschine durch die erforderliche Lagerbasis der beiden Lager der Triebwelle vergrößert wird.

Der vorliegenden Erfindung liegt die Aufgabe zugrunde, eine Axialkolbenmaschine in Schrägachsenbauweise der eingangs genannten Gattung zur Verfügung zu stellen, die eine exakte drehsynchrone Mitnahme der Zylindertrommel mit geringem Bauaufwand für das Mitnahmegelenk aufweist und hinsichtlich des Bauaufwandes vereinfacht ist und auf einfache Weise für universelle Anwendungen einsetzbar ist.

Diese Aufgabe wird erfindungsgemäß dadurch gelöst, dass das Mitnahmegelenk als Kegelstrahl-Halbwalzengelenk ausgebildet ist. Mit einem als Kegelstrahl-Halbwalzengelenk ausgebildeten Mitnahmegelenk kann mit geringem Bauaufwand für das Mitnahmegelenk eine Mitnahme der Zylindertrommel bei einer Axialkolbenmaschine in Schrägachsenbauweise erzielt werden. Ein derartiges Kegelstrahl-Halbwalzengelenk zwischen der Triebwelle und der Zylindertrommel kann auf einfache Weise durch entsprechende geometrische Auslegung als homokinetisches Gleichlaufgelenk ausgeführt werden, bei dem eine exakte und gleichförmige Mitnahme der Zylindertrommel erfolgt. Zudem kann bei einem zwischen der Triebwelle und der Zylindertrommel angeordneten Kegelstrahl-Halbwalzengelenk als Mitnahmegelenk für die Mitnahme der Zylindertrommel auf einfache Weise die Triebwelle durch die Axialkolbenmaschine in axialer Richtung hindurchgeführt werden, so dass die erfindungsgemäße Axialkolbenmaschine für universelle Anwendungen geeignet ist, bei denen durch eine Durchtriebsmöglichkeit ein Drehmomentabgriff an beiden Seiten der Triebwelle gewünscht ist oder ein Drehmoment zum Antrieb eines weiteren Verbrauchers durch die Axialkolbenmaschine hindurchgeführt werden soll.

Gemäß einer vorteilhaften Ausführungsform der Erfindung ist das Kegelstrahl-Halbwalzengelenk von zumindest einem Walzenpaar mit zwei halbzylindrischen Halbwalzen gebildet, wobei die halbzylindrischen Halbwalzen bis zu einer Rotationsachse abgeflacht sind und die Halbwalzen an den abgeflachten Seiten ebene Gleitflächen bilden, an denen die Halbwalzen des Walzenpaares unter Ausbildung einer Flächenberührung aneinanderliegen. Die Halbwalzen sind somit jeweils paarweise angeordnet. Die Halbwalzen eines Walzenpaares des Kegelstrahl-Halbwalzengelenks sind im Wesentlichen von bis zur Rotationsachse und somit bis zu der Längsachse abgeflachten zylindrischen Körpern gebildet. Durch die Abflachung entstehen an den abgeflachten Seiten der Halbwalzen ebene Gleitflächen als Kontaktflächen, an denen die beiden Halbwalzen eines Walzenpaares aneinanderliegen und die Kraftübertragung über eine Flächenberührung zwischen den ebenen Flächen erfolgt. Mit derartigen Walzenpaaren, die jeweils aus zwei halbzylindrischen Halbwalzen bestehen, deren Halbwalzen bis zu einer Rotationsachse und somit der Längsachse der Halbwalzen abgeflacht sind und die an den abgeflachten Seiten unter Ausbildung einer Flächenberührung aneinander liegen und ebene Gleitflächen bilden, können die Kräfte und somit das Drehmoment zur Mitnahme der Zylindertrommel mit geringem Bauaufwand übertragen werden, da die Halbwalzen einfach und kostengünstig herstellbar sind. Dadurch dass die Kontaktflächen zwischen den beiden Halbwalzen eines Walzenpaares als ebene Gleitflächen ausgebildet sind und eine Flächenberührung zwischen den beiden Halbwalzen eines Walzenpaares zur Kraftübertragung auftritt, entstehen auch bei hohen zu übertragenden Kräften bei der Mitnahme der Zylindertrommel geringe Hertzsche Pressungen. Das von entsprechenden Walzenpaaren gebildete Kegelstrahl-Halbwalzengelenk ist somit weiterhin robust gegen eine Überlast, die beispielsweise durch eine hohe Drehbeschleunigung entstehen kann. Bei der Ausführung der erfindungsgemäßen Axialkolbenmaschine als Hydromotor kann somit die erfindungsgemäße Axialkolbenmaschine auch bei Anwendungen mit hohen Drehbeschleunigungen eingesetzt werden. Durch die Ausbildung einer Flächenberührung im Bereich der Kontaktflächen der beiden Halbwalzen eines Walzenpaares genügt an den Halbwalzen des Kegelstrahl-Halbwalzengelenks eine Behandlung der abgeflachten Seiten hinsichtlich eines Verschleißschutzes. Bei einer derartigen Behandlung mit einer begrenzten Oberflächenhärtung treten lediglich geringfügige, verfahrensbedingte Änderung der Bauteilmaße der Halbwalzen auf, so dass eine mechanische Nacharbeit der Halbwalzen nicht erforderlich ist. Der Herstellaufwand für die erfindungsgemäße Axialkolbenmaschine in Schrägachsenmaschine kann somit aufgrund des einfach herzustellenden Kegelstrahl-Halbwalzengelenks gesenkt werden.

Besondere Vorteile ergeben sich, wenn gemäß einer Ausführungsform der Erfindung die Halbwalzen in radialer Richtung innerhalb der Kolben und beabstandet von den Rotationsachsen der Triebwelle und der Zylindertrommel angeordnet sind. Das Kegelstrahl-Halbwalzengelenk ist somit innerhalb des Kranzes und des Teilkreises der Kolben angeordnet, wodurch eine bauraumsparende Ausführung der Axialkolbenmaschine erzielbar ist. Zudem weisen die Halbwalzen der Walzenpaare senkrechte Abstände zu der Rotationachse der Triebwelle und der Rotationsachse der Zylindertrommel auf, so dass an den von den ebenen Gleitflächen gebildeten Kontaktflächen das Drehmoment zur Mitnahme der Zylindertrommel übertragen werden kann. Diese Anordnung der Halbwalzen des Kegelstrahl-Halbwalzengelenks ermöglicht es ebenfalls auf einfache Weise, die Triebwelle durch die Zylindertrommel und die Axialkolbenmaschine hindurchzuführen und eine Durchtriebsmöglichkeit zu schaffen.

Vorteilhafterweise weißt jedes Walzenpaar eine zu der Zylindertrommel gehörige zylindertrommelseitige Halbwalze und eine zu der Triebwelle gehörige triebwellenseitige Halbwalze auf, so dass die Kräfte und ein Drehmoment zur Mitnahme der Zylindertrommel auf einfache Weise übertragen werden können.

Die zylindertrommelseitige Halbwalze eines Walzenpaares ist gemäß einer bevorzugten Ausgestaltungsform der Erfindung in einer zylindrischen, insbesondere teilzylindrischen, zylindertrommelseitigen Aufnahme und die triebwellenseitige Halbwalze eines Walzenpaares in einer zylindrischen, insbesondere teilzylindrischen, triebwellenseitigen Aufnahme aufgenommen. Derartige Aufnahmen, in denen die entsprechende Halbwalze aufgenommen und gebettet ist, können auf einfache Weise und mit geringem Herstellaufwand hergestellt werden, wodurch in Verbindung mit den einfach und kostengünstig herzustellenden Halbwalzen das erfindungsgemäße Mitnahmegelenk einen geringen Herstellungsaufwand verursacht.

Die Rotationsachse der triebwellenseitigen Halbwalze ist gemäß einer Ausgestaltungsform der Erfindung zur Rotationsachse der Triebwelle um einen Neigungswinkel geneigt und schneidet die Rotationsachse der Triebwelle. Sofern mehrere triebwellenseitige Halbwalzen vorgesehen sind, bilden deren Rotationsachsen einen Kegelstrahl bezüglich der Triebwelle.

Entsprechend ist die Rotationsachse der zylindertrommelseitigen Halbwalze zur Rotationsachse der Zylindertrommel um einen Neigungswinkel geneigt und schneidet die Rotationsachse der Zylindertrommel. Sofern mehrere zylindertrommelseitige Halbwalzen vorgesehen sind, bilden deren Rotationsachsen ebenfalls einen Kegelstrahl bezüglich der Zylindertrommel.

Besondere Vorteile ergeben sich, wenn gemäß einer Ausführungsform der Erfindung die Neigungswinkel betragsmäßig identisch sind und sich die Rotationsachse der zylindertrommelseitigen Halbwalze und die Rotationsachse der triebwellenseitigen Halbwalze jedes Walzenpaares in einer Ebene schneidet, die senkrecht zu der Winkelhalbierenden zwischen der Rotationsachse der Triebwelle und der Rotationsachse der Zylindertrommel ist, und die Halbwalzen eines Walzenpaars im Bereich des Schnittpunktes der Rotationsachsen der Halbwalzen angeordnet sind. Sofern die Neigungswinkel der Rotationachsen der Halbwalzen für die Triebwelle und für die Zylindertrommel und somit für die beiden miteinander zu koppelnden Bauteile gleich groß und somit betragsmäßig identisch, wird erzielt, dass sich paarweise und somit für jedes Walzenpaar die jeweiligen Rotationsachsen der zur Triebwelle gehörenden Halbwalzen mit den Rotationsachsen der zur Zylindertrommel gehörenden Halbwalzen in einer mit dem halben Schwenkwinkel geneigten Ebene schneiden. Der Schwenkwinkel entspricht herbei dem Neigungswinkel der Rotationsachse der Zylindertrommel zur Rotationsachse der Triebwelle. Die Schnittpunkte der Rotationsachsen der Walzenpaare liegen somit in einer Ebene, die senkrecht zu der Winkelhalbierenden zwischen der Rotationsachse der Triebwelle und der Rotationsachse der Zylindertrommel ist. In diesen Schnittpunkten erfolgt an den beiden, mit den ebenen Gleitflächen aneinderliegenden Halbwalzen jedes Walzenpaares die Kraftüberragung zur Mitnahme der Zylindertrommel. Die Lage der Schnittpunkte der Rotationsachsen der Halbwalzen eines jeden Walzenpaares auf der Winkelhalbierenden führt dazu, dass die senkrechten und somit radialen Abstände der Schnittpunkte zu der Rotationsachse der Zylindertrommel und zu der Rotationsachse des Triebflansches gleich sind. Durch die von den gleichen Abständen gebildeten gleichen Hebelarme entstehen somit gleiche Winkelgeschwindigkeiten und somit eine gleichförmige Drehung. Durch die Ausbildung gleicher Neigungswinkel der Halbwalzen der Walzenpaare des Kegelstrahl-Walzengelenks wird somit eine Ausführung des Kegelstrahl-Walzengelenks als Gleichlaufgelenk erzielt, das mit geringem Bauaufwand eine exakte drehsynchrone Mitnahme der Zylindertrommel ermöglicht.

Die erfindungsgemäße Axialkolbenmaschine kann lediglich in einer Rotationsrichtung betrieben werden, wobei es ausreichend ist, für diese Rotationsrichtung ein oder mehrere Walzenpaare vorzusehen, die eine Übertragung eines Mitnahmedrehmoments in der gewünschten Rotationsrichtung zwischen der Triebwelle und der Zylindertrommel ermöglichen.

Sofern die Axialkolbenmaschine gemäß einer Weiterbildung der Erfindung in beide Rotationsrichtungen betreibbar ist, ergeben sich besondere Vorteile, wenn für jede Drehrichtung jeweils zumindest ein Walzenpaar zur drehsynchronen Mitnahme der Zylindertrommel und Übertragung eines Mitnahmedrehmoments vorgesehen ist. Hierdurch wird auf einfache Weise eine Übertragung eines Mitnahmedrehmoments in beiden Rotationsrichtung zwischen der Triebwelle und der Zylindertrommel erzielt.

Entsprechend des zu übertragenden Drehmoment zwischen der Triebwelle und der Zylindertrommel kann es bei kleinen zu übertragenden Drehmomenten ausreichend sein, für jede Rotationsrichtung und somit jede Momentenrichtung des Mitnahmedrehmoments nur ein einziges Walzenpaar vorzusehen. Für höhere zu übertragenden Drehmomente zwischen der Triebwelle und der Zylindertrommel kann die Anzahl der Walzenpaare für die entsprechende Rotationsrichtung erhöht werden. Sofern über den Umfang mehrere Walzenpaare, insbesondere mindestens zwei Walzenpaare, verteilt, bevorzugt gleichmäßig verteilt, angeordnet sind, wird ein radialer Kraftausgleich für jede Richtung des Mitnahmedrehmoments erzielt.

Gemäß einer Ausgestaltungsform der Erfindung kann das zumindest eine Walzenpaar in Längsrichtung der Zylindertrommel außerhalb der Zylindertrommel angeordnet sein.

Sofern gemäß einer alternativen Ausgestaltungsform der Erfindung das zumindest eine Walzenpaar in Längsrichtung der Zylindertrommel zumindest teilweise innerhalb der Zylindertrommel angeordnet ist, wird eine in axialer Richtung kompakte Bauweise ermöglicht, die die Ausführung der Axialkolbenmaschine als in axialer Richtung kompakt bauende Axialkolbenmaschine ermöglicht.

Gemäß einer Weiterbildung der Erfindung ist die jeweilige in einer zylindrischen Aufnahme aufgenommene Halbwalze in der Aufnahme in Längsrichtung der Rotationsachse gesichert. Hierdurch kann im Betrieb der Axialkolbenmaschine ein Herausgleiten der Halbwalzen aus der jeweiligen zylindrischen Aufnahme sicher verhindert werden.

Eine derartige Sicherung der Halbwalzen in Längsrichtung kann mit geringem Bauaufwand erzielt werden, wenn die Halbwalzen am zylindrischen Abschnitt mit einem Bund versehen sind, der in eine Nut der Aufnahme eingreift. Ein beispielsweise als Ringbund ausgebildeter Bund bzw. eine als Ringnut ausgebliebene Nut kann an der entsprechenden Halbwalze bzw. der entsprechenden Aufnahme auf einfache Weise und mit geringem Herstellaufwand hergestellt werden und ermöglicht eine axiale Sicherung der jeweiligen Halbwalze in der zugeordneten Aufnahme.

Die triebwellenseitigen Aufnahmen für die triebwellenseitigen Halbwalzen der entsprechenden Walzenpaare können in der Triebwelle oder in dem Triebflansch ausgebildet sein, so dass die Abstützung der triebwellenseitigen Halbwalzen der entsprechenden Walzenpaare direkt auf der Triebwelle erfolgt.

Alternativ zu einer direkten Abstützung der triebwellenseitigen Halbwalzen der entsprechenden Walzenpaare auf der Triebwelle können die triebwellenseitigen Aufnahmen in einem mit der Triebwelle drehfest verbundenen Bauteil ausgebildet sein. Hierdurch können Vorteile hinsichtlich einer einfachen Herstellung und Fertigung der triebwellenseitigen Aufnahmen erzielt werden. Das mit den triebwellenseitigen Aufnahmen versehene Bauteil kann hierbei auf einfache Weise durch eine formschlüssige oder kraftschlüssige Drehmomentverbindung mit der Triebwelle drehfest verbunden werden.

Der Triebflansch kann gemäß einer Ausgestaltungsform der Erfindung an der Triebwelle einstückig angeformt sein. Zudem ist es alternativ möglich, den Triebflansch und die Triebwelle geteilt auszuführen, wobei der Triebflansch mit der Triebwelle drehmomentfest verbunden ist. Der Triebflansch ist somit getrennt von der Triebwelle ausgeführt und kann über eine geeignete Drehmomentverbindung, beispielsweise eine Welle-Nabe-Verbindung, die von einer Keilverzahnung gebildet sein kann, mit der Triebwelle drehfest verbunden sein.

Die zylindertrommelseitigen Aufnahmen für die zylindertrommelseitigen Halbwalzen der entsprechenden Walzenpaare können direkt in der Zylindertrommel angeordnet sein, wodurch die Abstützung der zylindertrommelseitigen Halbwalzen der entsprechenden Walzenpaare direkt an der Zylindertrommel erfolgt.

Alternativ zu einer direkten Abstützung der zylindertrommelseitigen Halbwalzen der entsprechenden Walzenpaare an der Zylindertrommel können die zylindertrommelseitigen Halbwalzen in einem hülsenförmigen Mitnehmerelement angeordnet sein, das mit der Zylindertrommel drehfest verbunden ist. Hierdurch können Vorteile hinsichtlich einer einfachen Herstellung und Fertigung der zylindertrommelseitigen Aufnahmen erzielt werden. Das mit den zylindertrommelseitigen Aufnahmen versehene Mitnehmerelement kann hierbei auf einfache Weise durch eine formschlüssige oder kraftschlüssige Drehmomentverbindung mit der Zylindertrommel drehfest verbunden werden.

Einer vorteilhaften Weiterbildung der Erfindung ist das Mitnehmerelement bzw. die Zylindertrommel mit mindestens einer fingerförmigen Erhebung versehen, die sich in Richtung zur Triebwelle erstreckt und in der jeweils eine zylindertrommelseitige Aufnahme für eine zylindertrommelseitige Halbwalze ausgebildet ist. Mit derartigen fingerförmigen Erhebungen wird auf einfache Weise ermöglicht, die beiden Halbwalzen des Walzenpaares zur Übertragung des Mitnahmemoments zwischen der Zylindertrommel und der Triebwelle anzuordnen.

Mit besonderem Vorteil ist gemäß einer Weiterbildung der Erfindung die Triebwelle bzw. der Triebflansch bzw. das mit der Triebwelle drehfest verbundenen Bauteil mit mindestens einer taschenförmigen Ausnehmung versehen, in die das Mitnehmerelement bzw. die Zylindertrommel mit jeweils einer fingerförmigen Erhebung eingreift, wobei in der taschenförmigen Ausnehmung jeweils eine triebwellenseitige Aufnahme für eine triebwellenseitige Halbwalze ausgebildet ist. Die fingerförmigen Erhebung an dem Mitnehmerelement bzw. der Zylindertrommel greifen somit jeweils in eine taschenförmige triebwellenseitige Ausnehmung ein, wodurch eine bauraumsparende Anordnung des als Kugelstrahl-Halbwalzengelenks ausgebildete Mitnahmegelenks zwischen der Triebwelle und der Zylindertrommel erzielt wird.

Gemäß einer vorteilhaften Weiterbildung der Erfindung ist zwischen der Triebwelle und der Zylindertrommel eine kugelförmige Führung ausgebildet. Mit einer kugelförmigen Führung, die von einem kugelförmigen Abschnitt an der Triebwelle und einem hohlkugelförmigen Abschnitt an der Zylindertrommel oder dem hülsenförmigen Mitnehmerelement gebildet ist, kann auf einfache Weise die Zylindertrommel zentriert und gelagert werden. Sofern das Mitnahmegelenk mit den Walzenpaaren im Bereich der kugelförmigen Führung angeordnet ist, wird eine bauraumsparende Ausführung der Axialkolbenmaschine ermöglicht.

Gemäß einer bevorzugten Weiterbildung der Erfindung ist die Zylindertrommel mit einer konzentrisch zur Rotationachse der Zylindertrommel angeordneten Längsausnehmung versehen, durch die sich die mit dem Triebflansch versehene Triebwelle durch die Zylindertrommel hindurcherstreckt. Das erfindungsgemäße als Kegelstrahl-Halbwalzengelenk ausgebildete Mitnahmegelenk zwischen der Triebwelle und der Zylindertrommel ermöglicht es in Verbindung mit der kugelförmige Führung zwischen der Triebwelle und der Zylindertrommel, die Zylindertrommel mit einer konzentrisch zur Rotationachse der Zylindertrommel angeordneten Längsausnehmung zu versehen, durch die die Triebwelle hindurchgeführt werden kann, um eine Durchtriebsmöglichkeit bei der erfindungsgemäßen Axialkolbenmaschine zu erzielen.

Das hülsenförmige Mitnehmerelement ist hierbei vorteilhafterweise in der Längsausnehmung der Zylindertrommel drehfest angeordnet. Die Triebwelle erstreckt sich somit ebenfalls durch das hülsenförmige Mitnehmerelement.

Gemäß einer vorteilhaften Weiterbildung der Erfindung ist die Triebwelle an beiden Enden zur Drehmomentübertragung mit jeweils einem Drehmomentübertragungsmittel versehen. Hierdurch ist eine universelle Anwendung der erfindungsgemäßen Axialkolbenmaschine erzielbar, bei der ein Drehmoment an beiden Seiten der Triebwelle abgegriffen werden kann bzw. ein Drehmoment zum Antrieb eines weiteren Verbrauchers durch die Axialkolbenmaschine hindurchgeführt werden kann.

Gemäß einer vorteilhaften Weiterbildung der Erfindung ist die Triebwelle als Hohlwelle ausgebildet, durch die eine die Axialkolbenmaschine durchsetzende Durchtriebswelle hindurch geführt ist. Hierdurch ist eine universelle Anwendung der erfindungsgemäßen Axialkolbenmaschine erzielbar, wobei an der Triebwelle und der durch die als Hohlwelle ausgebildeten Triebwelle hindurchgeführten Durchtriebswelle verschiedene Drehmomente mit unterschiedlichen Drehzahlen und/oder unterschiedlichen Drehrichtungen herrschen können.

Die Triebwelle kann gemäß einer Ausgestaltungsform der Erfindung in einem Gehäuse der Axialkolbenmaschine einseitig im Bereich des Triebflansches gelagert sein. Hierdurch ergibt sich eine fliegende Lagerung des Triebflansches.

Mit besonderem Vorteil ist gemäß einer alternativen Ausgestaltungsform der Erfindung die Triebwelle in einem Gehäuse beidseitig der Zylindertrommel gelagert. Hierdurch wird eine breite Lagerbasis der Triebwelle erzielt, wodurch eine kompakte Baulänge der erfindungsgemäßen Axialkolbenmaschine erzielbar ist. Zudem weist eine beidseitige Lagerung der Triebwelle Vorteile bei einer durch die Axialkolbenmaschine hindurchgeführten Triebwelle auf.

Die Mittelpunkte der Gelenkverbindungen der Kolben mit dem Triebflansch können gemäß einer Ausgestaltung der Erfindung in Längsrichtung der Zylindertrommel außerhalb der Zylindertrommel angeordnet sind. Bei einer Rotation der Zylindertrommel befinden sich somit die Gelenkverbindungen der Kolben mit dem Triebflansch außerhalb der Längserstreckung der Zylindertrommel.

Weitere Vorteile hinsichtlich einer kompakten Baulänge der erfindungsgemäßen Axialkolbenmaschinen werden erzielt, wenn gemäß einer Weiterbildung der Erfindung die Mittelpunkte der Gelenkverbindungen der Kolben mit dem Triebflansch in Längsrichtung der Zylindertrommel zumindest teilweise innerhalb der Zylindertrommel angeordnet sind. Bei einer Rotation der Zylindertrommel befinden sich somit die Gelenkverbindungen der Kolben mit dem Triebflansch zumindest teilweise innerhalb der Längserstreckung der Zylindertrommel. Hierdurch kann eine besonders kurze Baulänge in axialer Richtung der Axialkolbenmaschine erzielt werden. Zudem ermöglicht diese Bauweise, dass zwischen der Triebwelle und der Zylindertrommel ein vergrößerter Freiraum erzielbar ist, so dass der Schwenkwinkel der Zylindertrommel vergrößert werden kann und eine Erhöhung der Leistungsdichte der Axialkolbenmaschine erzielbar ist bzw. der Durchmesser der Triebwelle vergrößert werden kann, um einen Erhöhung des Durchtriebsdrehmoments zu erzielen.

Die Axialkolbenmaschine kann als Konstantmaschine mit einem festen Verdrängervolumen ausgebildet sein.

Bei dem als Kegelstrahl-Halbwalzengelenk ausgeführte Mitnahmegelenk, das auf einfache Weise als Gleichlaufgelenk ausgeführt werden kann, zur Mitnahme der Zylindertrommel ist zudem eine Veränderung des Schwenkwinkels, d.h. der Rotationsachsen der Triebwelle und der Zylindertrommel zueinander möglich, so dass das als Kegelstrahl-Halbwalzengelenk ausgeführte Mitnahmegelenk für eine Verstellmaschine mit einem veränderbaren Verdrängervolumen geeignet ist. Das erfindungsgemäße Mitnahmegelenk hat als Vorteil, dass bei einer Verringerung des Schwenkwinkels durch Zurückschwenken der Zylindertrommel kein Losespiel auftritt mit den damit einhergehenden Nachteilen wie bei den Axialkolbenmaschinen in Schrägsachsenbauweise des Standes der Technik mit einer Mitnahme der Zylindertrommel über Pleuel oder über die Kolben.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform einer erfindungsgemäßen Schrägachsenmaschine in einem Längsschnitt,
- Figur 2: einen Ausschnitt der Figur 1 im Bereich des erfindungsgemäßen Mitnahmegelenks in einer vergrößerten Darstellung,
- Figur 3: einen Schnitt entlang der Linie A-A der Figur 2 mit den an dem Mitnahmegelenk auftretenden Übertragungskräften für eine erste Drehrichtung,
- Figur 4,: einen Schnitt entlang der Linie A-A der Figur 2 mit den an dem Mitnahmegelenk auftretenden Übertragungskräften für eine zweite, entgegengesetzte Drehrichtung,
- Figur 5: eine zweite Ausführungsform einer erfindungsgemäßen Schrägachsenmaschine in einem Längsschnitt,
- Figur 6: eine dritte Ausführungsform einer erfindungsgemäßen Schrägachsenmaschine in einem Längsschnitt,
- Figur 7: eine vierte Ausführungsform einer erfindungsgemäßen Schrägachsenmaschine in einem Längsschnitt,
- Figur 8: das erfindungsgemäße Mitnahmegelenk zwischen der Triebwelle und der Zylindertrommel in einer dreidimensionalen Darstellung,
- Figur 9: die Darstellung der Figur 8 mit den Walzenpaaren des Mitnahmegelenks bei entfernter Zylindertrommel,
- Figur 10: eine Darstellung der Walzenpaare der Figuren 8 und 9,
- Figur 11: die Triebwelle des erfindungsgemäßen Mitnahmegelenks in einer dreidimensionalen Darstellung,
- Figur 12: die Zylindertrommel des erfindungsgemäßen Mitnahmegelenks mit den Walzenpaaren in einer dreidimensionalen Darstellung und
- Figur 13: eine Ansicht gemäß der Figur 12 ohne die Walzenpaare des erfindungsgemäßen Mitnahmegelenks.

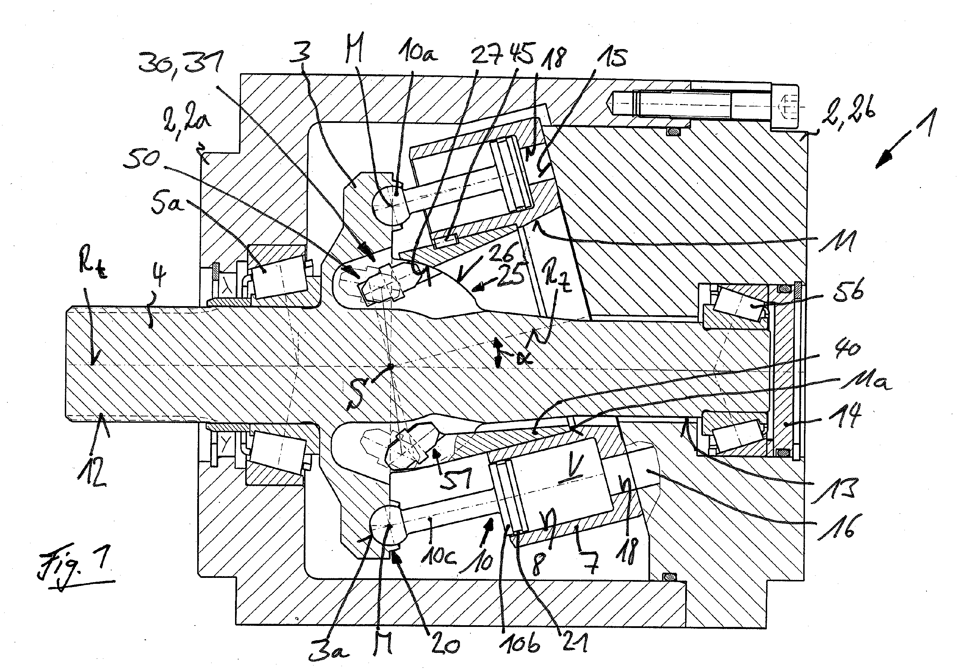

Die erfindungsgemäße als Schrägachsenmaschine ausgebildete hydrostatische Axialkolbenmaschine 1 gemäß der Figur 1 weist ein Gehäuse 2 auf, das aus einem Gehäusetopf 2a und einem Gehäusedeckel 2b besteht. In dem Gehäuse 2 ist eine mit einem Triebflansch 3 versehene Triebwelle 4 mittels Lagern 5a, 5b um eine Rotationsachse Rₜ drehbar gelagert. Im dargestellten Ausführungsbeispiel ist der Triebflansch 3 einstückig an der Triebwelle 4 angeformt.

Axial benachbart zu dem Triebflansch 3 ist eine Zylindertrommel 7 in dem Gehäuse 2 angeordnet, die mit mehreren Kolbenausnehmungen 8 versehen ist, die konzentrisch zu einer Rotationsachse R_{z} der Zylindertrommel 7 angeordnet sind. In jeder Kolbenausnehmung 8 ist ein Kolben 10 längsverschiebbar angeordnet.

Die Rotationsachse Rₜ der Triebwelle 4 schneidet die Rotationsachse R_{z} der Zylindertrommel 7 im Schnittpunkt S.

Die Zylindertrommel 7 ist mit einer zentralen, konzentrisch zur Rotationsachse R_{z} der Zylindertrommel 7 angeordneten Längsausnehmung 11 versehen, durch die sich die Triebwelle 4 hindurcherstreckt. Die durch die Axialkolbenmaschine hindurchgeführte Triebwelle 4 ist mittels der Lager 5a, 5b beidseitig der Zylindertrommel 7 gelagert. Hierzu ist die Triebwelle 4 mit dem Lager 5a in dem Gehäusetopf 2a und mit dem Lager 5b in dem Gehäusedeckel 2b gelagert.

Die Triebwelle 4 ist an dem triebflanschseitigen Ende mit einem Drehmomentübertragungsmittel 12, beispielsweise einer Keilverzahnung, zum Einleiten eines Antriebsdrehmoments bzw. Abgriff eines Abtriebsdrehmoments ausgeführt. Das gegenüberliegende, zylindertrommelseitige Ende der Triebwelle 4 kann ebenfalls mit einem Drehmomentübertragungsmittel versehen werden, um einen Durchtrieb durch die Axialkolbenmaschine 1 zu erzielen. Mit dem Durchtrieb kann ein Drehmoment durch die Axialkolbenmaschine 1 hindurchgeführt werden oder bei einer als Motor ausgebildete Axialkolbenmaschen ein beidseitiger Abtrieb ermöglicht werden. In dem Gehäusedeckel 2b ist hierzu eine Durchgangsbohrung 13 für die Triebwelle 4 ausgebildet, die im dargestellten Ausführungsbeispiel durch einen Deckel 14 verschlossen ist.

Die in der Figur 1 dargestellte Axialkolbenmaschine ist als Konstantmaschine mit einem festen Verdrängervolumen ausgeführt, wobei die Rotationsachse R_{z} der Zylindertrommel 7 zur Rotationsachse Rₜ der Triebwelle 4 einen festen Neigewinkel bzw. Schwenkwinkel α aufweist.

Die Zylindertrommel 7 liegt zur Steuerung der Zu- und Abfuhr von Druckmittel in den von den Kolbenausnehmungen 8 und den Kolben 10 gebildeten Verdrängerräumen V an einer an dem Gehäusedeckel 2b ausgebildeten Steuerfläche 15 an, die mit nicht mehr dargestellten nierenförmigen Steuerausnehmungen versehen ist, die einen Einlassanschluss 16 und einen Auslassanschluss der Axialkolbenmaschine 1 bilden. Zur Verbindung der von den Kolbenausnehmungen 8 und den Kolben 10 gebildeten Verdrängerräumen V mit den in dem Gehäusedeckel 2b angeordneten Steuerausnehmungen ist die Zylindertrommel 7 an jeder Kolbenausnehmung 8 mit einer Steueröffnung 18 versehen.

Die Kolben 10 sind jeweils an dem Triebflansch 3 gelenkig befestigt. Hierzu ist zwischen dem jeweiligen Kolben 10 und dem Triebflansch 3 jeweils eine als sphärisches Gelenk ausgebildete Gelenkverbindung 20 ausgebildet. Die Gelenkverbindung 20 ist im dargestellten Ausführungsbeispiel als Kugelgelenk ausgebildet, das von einem Kugelkopf 10a des Kolbens 10 und einer Kugelkalotte 3a in dem Triebflansch 3 gebildet ist, in der der Kolben 10 mit dem Kugelkopf 10a befestigt ist.

Die Kolben 10 weisen jeweils einen Bundabschnitt 10b auf, mit dem der Kolben 10 in der Kolbenausnehmung 8 angeordnet ist. Eine Kolbenstange 10c des Kolbens 10 verbindet den Bundabschnitt 10b mit dem Kugelkopf 10b.

Um eine Ausgleichsbewegung der Kolben 10 bei einer Rotation der Zylindertrommel 7 zu ermöglichen, ist der Bundabschnitt 10b des Kolbens 10 mit Spiel in der Kolbenausnehmung 8 angeordnet. Der Bundabschnitt 10b des Kolbens 10 kann hierzu sphärisch ausgeführt sein. Zur Abdichtung der Kolben 10 gegenüber den Kolbenausnehmungen 8 ist an dem Bundabschnitt 10b des Kolbens 10 ein Dichtungsmittel 21, beispielsweise ein Kolbenring, angeordnet.

Zur Lagerung und Zentrierung der Zylindertrommel 7 ist zwischen der Zylindertrommel 7 und der Triebwelle 4 eine kugelförmige Führung 25 ausgebildet. Die kugelförmige Führung 25 ist von einem kugelförmigen Abschnitt 26 der Triebwelle 4 gebildet, auf dem die Zylindertrommel 7 mit einem im Bereich der zentralen Längsausnehmung 11 angeordneten hohlkugelförmigen Abschnitt 27 angeordnet ist. Der Mittelpunkt der Abschnitte 26, 27 liegt auf dem Schnittpunkt S der Rotationsachse Rₜ der Triebwelle 4 und der Rotationsachse R_{z} der Zylindertrommel 7.

Bei der Axialkolbenmaschine 1 der Figur 1 sind die Mittelpunkte M der Gelenkverbindungen 20 der Kolben 10 mit dem Triebflansch 3 in Längsrichtung der Zylindertrommel 7 vollständig außerhalb der Zylindertrommel 7 angeordnet. Die Mittelpunkte M der Gelenkverbindungen 20 liegen somit bei einer Rotation der Zylindertrommel 7 um die Rotationsachse R_{z} immer außerhalb der Längserstreckung der Zylindertrommel 7.

Um im Betrieb der Axialkolbenmaschine 1 eine Mitnahme der Zylindertrommel 7 zu erzielen, ist zwischen der Triebwelle 4 und der Zylindertrommel 7 ein Mitnahmegelenk 30 angeordnet, das die Triebwelle 4 und die Zylindertrommel 7 in Drehrichtung koppelt. Das Mitnahmegelenk 30 ist als Gleichlaufgelenk ausgebildet, das eine drehsynchrone Mitnahme der Zylindertrommel 7 mit der Triebwelle 4 ermöglicht, so dass sich eine gleichmäßige, synchrone Drehung der Zylindertrommel 7 mit der Triebwelle 4 ergibt.

Erfindungsgemäß ist das als Gleichlaufgelenk ausgebildete Mitnahmegelenk 30 als Kegelstrahl-Halbwalzengelenk 31 ausgebildet.

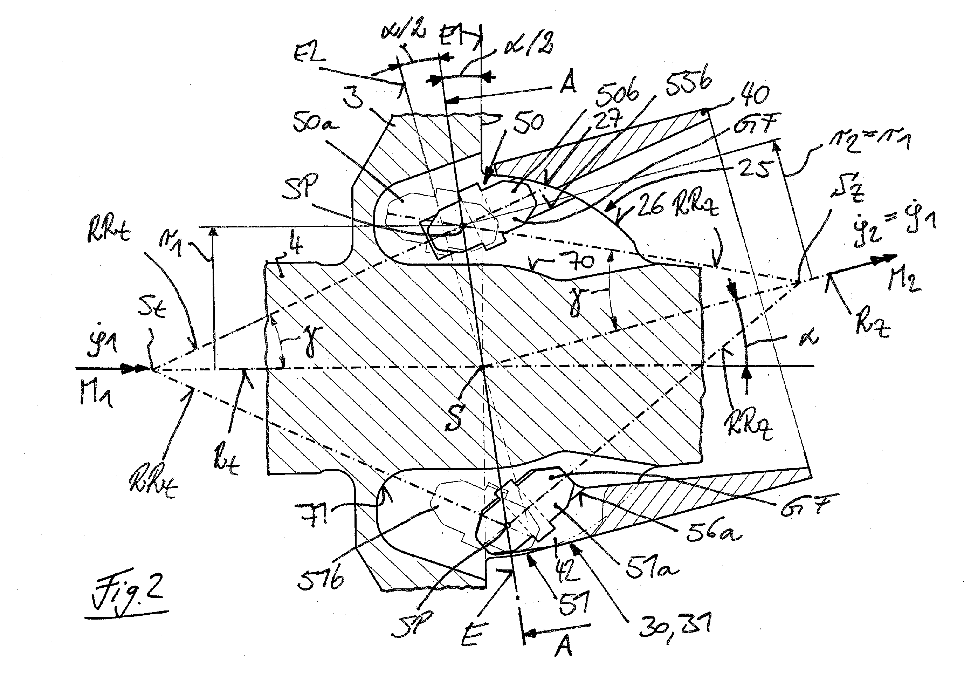

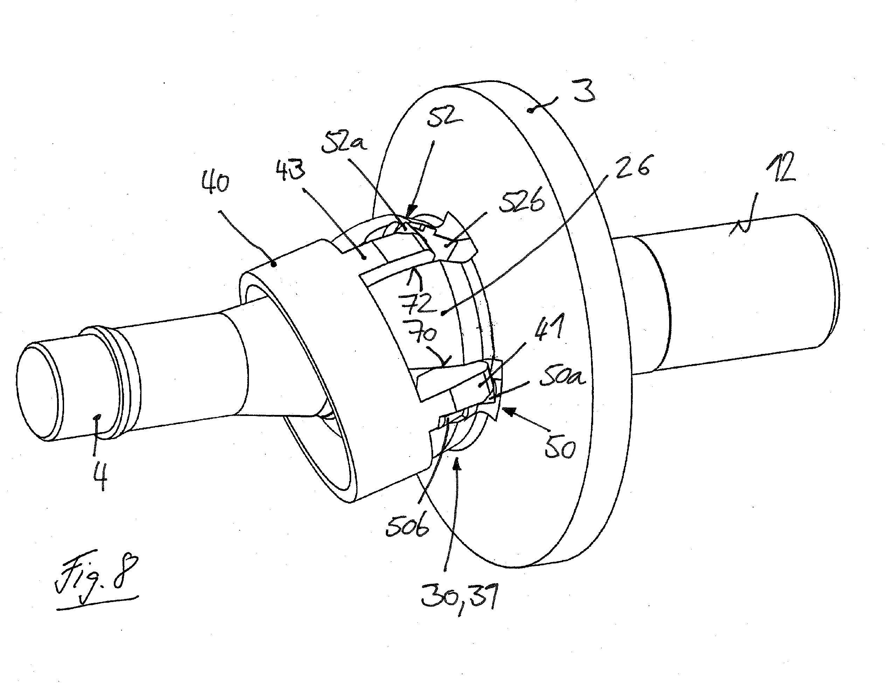

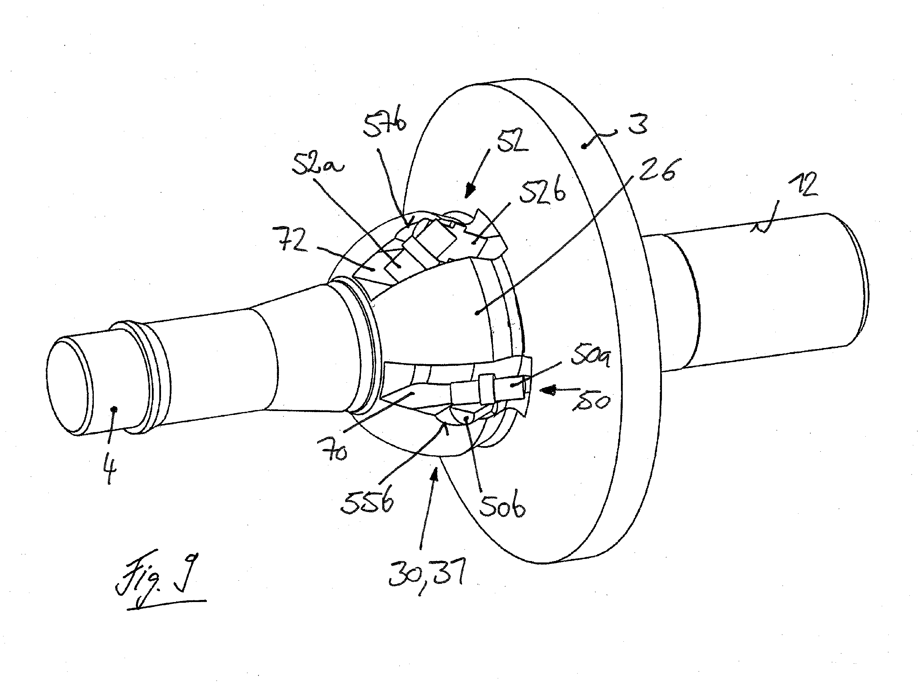

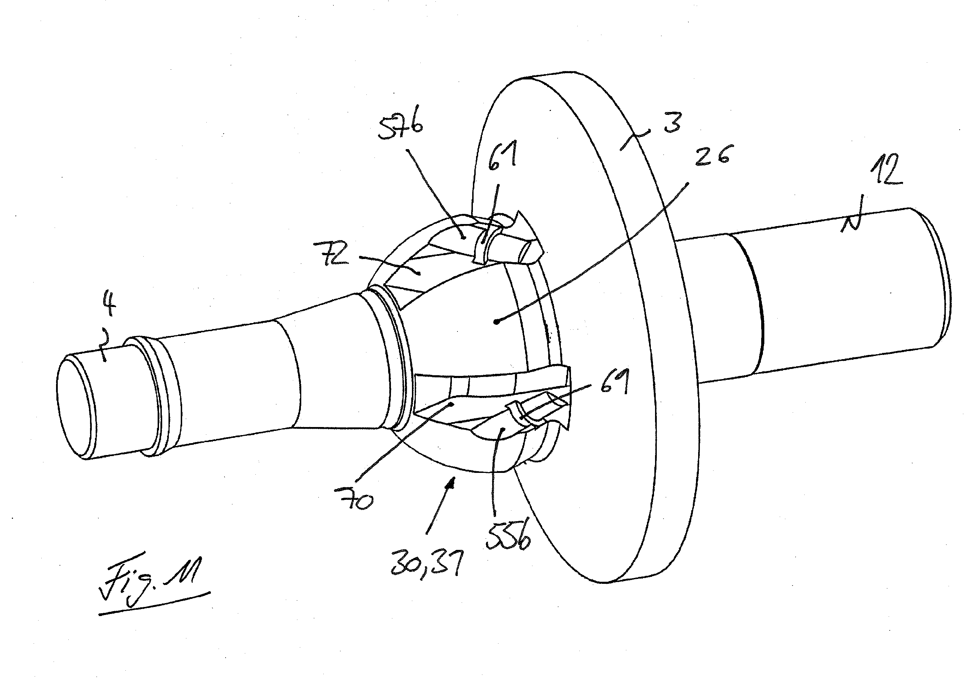

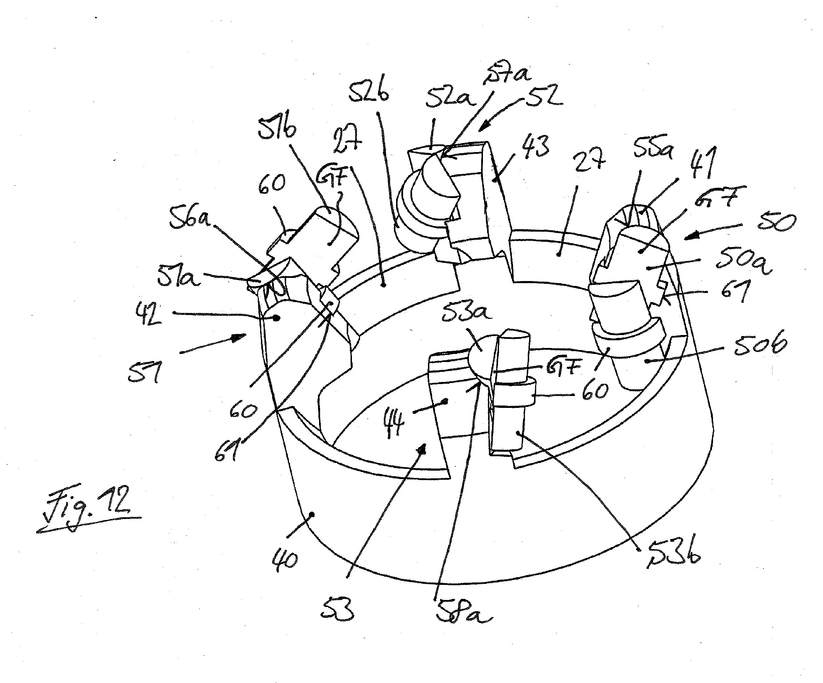

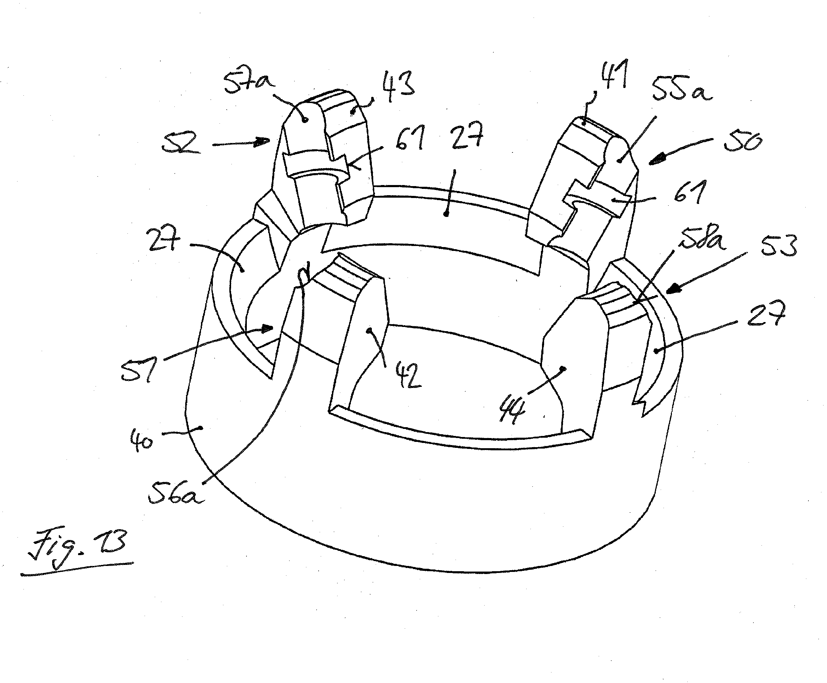

Der Aufbau des Kegelstrahl-Halbwalzengelenks 31, mit dem die Zylindertrommel 7 und die Triebwelle 4 drehsynchron gekoppelt ist, wird im Folgenden anhand der Figuren 2 bis 4 und der Figuren 8 bis 13 beschrieben.

Das Kegelstrahl-Halbwalzengelenk 31 wird von mehreren Walzenpaaren 50, 51, 52, 53 gebildet, die zwischen der Triebwelle 4 und einem mit der Zylindertrommel 7 drehfest verbundenen hülsenförmigen Mitnehmerelement 40 angeordnet sind.

Das hülsenförmige Mitnehmerelement 40 ist in der zentralen Längsausnehmung 11 der Zylindertrommel 7 angeordnet. Das Mitnehmerelement 40 ist an der Zylindertrommel 7 in Längsrichtung der Zylindertrommel 7 in axialer Richtung sowie in Umfangsrichtung gesichert. Zur Axialsicherung liegt das Mitnehmerelement 40 mit einer Stirnseite an einem Durchmesserabsatz 11a der Längsausnehmung 11 an. Die Verdrehsicherung erfolgt mittels eines Sicherungsmittels 45, das im dargestellten Ausführungsbeispiel von einem zwischen dem hülsenförmigen Mitnehmerelement 40 und der Zylindertrommel 7 angeordneten Verbindungsstift gebildet ist. Die durch die Axialkolbenmaschine 1 hindurchgeführte Triebwelle 4 erstreckt sich hierbei ebenfalls durch das hülsenförmige Mitnehmerelement 40.

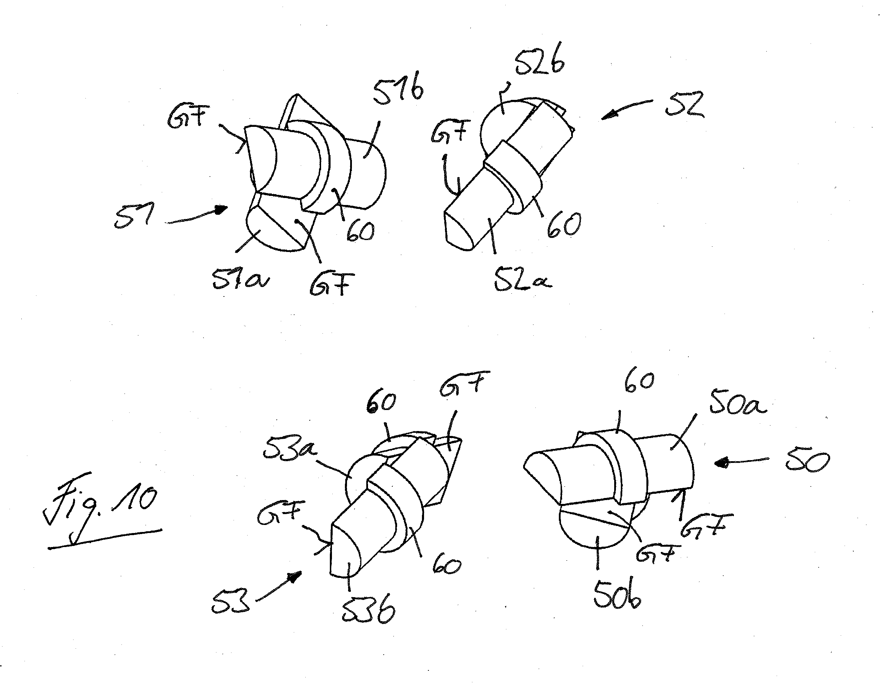

Jedes der mehreren Walzenpaare 50-53 des Kegelstrahl-Halbwalzengelenks 31 besteht aus jeweils zwei und somit einem Paar halbzylindrischer Halbwalzen 50a, 50b, 51 a, 51 b, 52a, 52b, 53a, 53b. Die halbzylindrischen Halbwalzen 50a, 50b, 51 a, 51 b, 52a, 52b, 53a, 53b sind - wie in Verbindung mit der Figur 10 verdeutlicht ist - jeweils von im Wesentlichen bis zu einer Rotationsachse RRₜ, RR_{z} abgeflachte zylindrische Körper. An den abgeflachten Seiten bilden die paarweise angeordneten Halbwalzen 50a, 50b, 51 a, 51 b, 52a, 52b, 53a, 53b ebene Gleitflächen GF, an denen die beiden Halbwalzen 50a, 50b, 51 a, 51 b, 52a, 52b, 53a, 53b eines Walzenpaares 50, 51, 52, 53 unter Ausbildung einer Flächenberührung aneinanderliegen.

Die Halbwalzen 50a, 50b, 51 a, 51 b, 52a, 52b, 53a, 53b sind in radialer Richtung innerhalb des Teilkreises der Kolben 10 und beabstandet von den Rotationsachsen Rₜ, R_{z} angeordnet. Das Kegelstrahl-Halbwalzengelenk 31 kann daher bauraumsparend innerhalb des Teilkreises der Kolben 10 angeordnet werden.

Jedes Walzenpaar 50-53 weist eine zu der Zylindertrommel 7 gehörige zylindertrommelseitige Halbwalze 50a, 51 a, 52a, 53a und eine zu der Triebwelle 4 gehörige triebwellenseitige Halbwalze 50b, 51 b, 52b, 53b auf, die an den ebenen Gleitflächen GF aneinanderliegen und miteinander in Kontakt stehen.

Die zylindertrommelseitige Halbwalze 50a, 51 a, 52a, 53a des entsprechenden Walzenpaares 50-53 sind jeweils in einer zylindrischen, insbesondere teilzylindrischen, zylindertrommelseitigen Aufnahme 55a, 56a, 57a, 58a und die triebwellenseitige Halbwalze 50b, 51 b, 52b, 53b eines Walzenpaares 50-53 in einer zylindrischen, insbesondere teilzylindrischen, triebwellenseitigen Aufnahme 55b, 56b, 57b, 58b aufgenommen.

Die Halbwalzen 50a, 51 a, 52a, 53a, 50b, 51 b, 52b, 53b sind in der jeweiligen zylindrischen Aufnahme 55a, 56a, 57a, 58a, 55b, 56b, 57b, 58b in Längsrichtung der entsprechenden Rotationsachse gesichert.

Hierzu ist jede Halbwalzen 50a, 51 a, 52a, 53a, 50b, 51 b, 52b, 53b im zylindrischen Abschnitt mit einem Bund 60 versehen sind, der in eine Nut 61 der entsprechenden Aufnahme 55a, 56a, 57a, 58a, 55b, 56b, 57b, 58b eingreift.

In der Figur 2 ist hierbei von dem Walzenpaar 50 mit dicken Linien die triebwellenseitige Halbwalze 50b und mit dünnen Linien die auf der Halbwalze 50b aufliegende zylindertrommelseitige Halbwalze 50a dargestellt. Von dem Walzenpaar 51 ist mit dicken Linien die zylindertrommelseitige Halbwalze 51a und mit dünnen Linien die auf der Halbwalze 51a aufliegende triebwellenseitige Halbwalze 51 b dargestellt. Von den Halbwalzen 50b und 51a sind die in der Schnittebene der Figur 2 liegenden abgeflachten, ebenen Gleitflächen GF dargestellt.

Bei dem erfindungsgemäßen Kegelstrahl-Halbwalzengelenk 31 sind - wie in der Figur 2 verdeutlicht sind - die Rotationsachsen RRₜ der triebwellenseitigen Halbwalzen 50b, 51 b, 52b, 53b zur Rotationsachse Rₜ der Triebwelle 4 um einen Neigungswinkel γ geneigt. Die Rotationsachsen RRₜ der triebwellenseitigen Halbwalze 50b, 51 b, 52b, 53b scheiden die Rotationsachse Rₜ der Triebwelle 4 im Schnittpunkt Sₜ.
Die einzelnen Rotationsachsen RRₜ der mehreren triebwellenseitigen Halbwalzen 50b, 51 b, 52b, 53b bilden einen in der Figur 2 dargestellten Kegelstrahl um die Rotationsachse Rₜ der Triebwelle 4 mit der Spitze im Schnittpunkt Sₜ.

Entsprechend sind die Rotationsachsen RR_{z} der zylindertrommelseitigen Halbwalzen 50a, 51 a, 52a, 53a zur Rotationsachse R_{z} der Zylindertrommel 7 um einen Neigungswinkel γ geneigt. Die Rotationsachsen RR_{z} der zylindertrommelseitigen Halbwalzen 50a, 51 a, 52a, 53a schneiden die Rotationsachse R_{z} der Zylindertrommel 7 im Schnittpunkt S_{z}. Die einzelnen Rotationsachsen RR_{z} der mehreren zylindertrommelseitigen Halbwalzen 50a, 51 a, 52a, 53a bilden einen in der Figur 2 dargestellten Kegelstrahl um die Rotationsachse R_{z} der Zylindertrommel 7 mit der Spitze im Schnittpunkt S_{z}.

Die Neigungswinkel γ der Rotationsachsen RR_{z} der zylindertrommelseitigen Halbwalzen 50a, 51a, 52a, 53a zur Rotationsachse R_{z} der Zylindertrommel 7 und der Rotationsachsen RRₜ der triebwellenseitigen Halbwalzen 50b, 51 b, 52b, 53b zur Rotationsachse Rₜ der Triebwelle 4 sind betragsmäßig identisch. Die Neigungswinkel γ der Rotationsachsen RR_{z}, RRₜ der Halbwalzen der miteinander zu koppelnden Triebwelle 4 und Zylindertrommel 7 sind somit gleich. Hierdurch wird erzielt, dass sich an den entsprechenden Walzenpaaren 50-53 jeweils paarweise die zu der Triebwelle 4 gehörigen Rotationsachsen RRₜ und die zur Zylindertrommel 7 gehörigen Rotationsachsen RR_{z} der ein Walzenpaar bildenden beiden Halbwalzen in einer Ebene E schneiden, die der Winkelhalbierenden zwischen der Rotationsachse Rₜ der Triebwelle 4 und der Rotationsachse R_{z} der Zylindertrommel 7 entspricht. Die in der Ebene E liegenden Schnittpunkte SP, in denen sich paarweise die jeweilige zu der Triebwelle 4 gehörige Rotationsachsen RRₜ mit der zur Zylindertrommel 7 gehörigen Rotationsachse RR_{z} der ein Walzenpaar bildenden zwei Halbwalzen schneiden, sind in der Figur 2 verdeutlicht. Die Ebene E ist somit mit dem halben Neigungswinkel bzw. Schwenkwinkel α/2 bezüglich einer senkrecht zur Rotationsachse Rₜ der Triebwelle 4 stehenden Ebene E1 und einer senkrecht zur Rotationsachse R_{z} der Zylindertrommel 7 stehenden Ebene E2 geneigt. Die Ebene E geht durch den Schnittpunkt S der Rotationsachsen Rₜ, R_{z}.

Die Halbwalzen 50a, 50b, 51a, 51 b, 52a, 52b, 53a, 53b des jeweiligen Walzenpaares 50, 51, 52, 53 sind im Bereich der Schnittpunkte SP der Rotationsachsen RRₜ, RR_{z} angeordnet, wodurch an den Schnittpunkte SP der beiden Halbwalzen des jeweiligen Walzenpaares 50-53 die Kraftübertragung zwischen den ebenen Gleitfläche GF zur Mitnahme der Zylindertrommel 7 stattfindet.

Durch die Lage der Schnittpunkte SP der beiden Halbwalzen der jeweiligen Walzenpaare 50-53 auf der winkelhalbierenden Ebene E ergibt sich, dass die senkrechten, radialen Abstände r₁, r₂ der Schnittpunkte SP zu der Rotationsachse Rₜ der Triebwelle 4 und zu der Rotationsachse R_{z} der Zylindertrommel 7 betragsmäßig gleich groß sind. Durch die gleich großen, von den radialen Abstände r₁, r₂ gebildeten Hebelarme der Schnittpunkte SP entstehen gleiche Winkelgeschwindigkeiten ϕ1 der Triebwelle 4 und ϕ2 der Zylindertrommel 7, wodurch das erfindungsgemäße Kegelstrahl-Halbwalzengelenk 31 ein Gleichlaufgelenk bildet, das eine exakte drehsynchrone und gleichmäßige Mitnahme und Drehung der Zylindertrommel 7 ermöglicht.

Im Betrieb der Axialkolbenmaschine 1 bei einer Drehung der Triebwelle 4 findet bei einer Neigung der Rotationsachse R_{z} der Zylindertrommel 7 zu der Rotationsachse Rₜ der Triebwelle 4 mit dem Neigungswinkel bzw. Schwenkwinkel α ein Gleiten der beiden Gleitflächen GF der beiden Halbwalzen jedes Walzenpaares 50-53 zueinander statt. Zudem findet eine Rotation der jeweiligen halbzylindrischen Halbwalze um die jeweilige Rotationsachse RRₜ bzw. RR_{z} in der von der zylindrischen Aufnahme 55a, 56a, 57a, 58a, 55b, 56b, 57b, 58b gebildeten Bettung der entsprechenden Halbwalze statt. Aufgrund der Neigung der Rotationsachsen RRₜ, RR_{z} der jeweils paarweise angeordneten Halbwalzen 50a, 50b, 51 a, 51 b, 52a, 52b, 53a, 53b zueinander können sich durch Drehung in den entsprechenden Aufnahmen 55a, 56a, 57a, 58a, 55b, 56b, 57b, 58b die ebenen Flächen und somit die Gleitflächen GF der aneinander liegenden Halbwalzen zueinander ausrichten.

Die in der Figur 1 dargestellte Axialkolbenmaschine 1 ist in beiden Drehrichtungen betreibbar. Um in beiden Drehrichtungen eine drehsynchrone Mitnahme der Zylindertrommel 7 zu erzielen, ist für jede Drehrichtung und somit Momentenrichtung des Mitnahmedrehmoments für die Mitnahme der Zylindertrommel 7 jeweils zumindest ein Walzenpaar 50-53 vorgesehen.

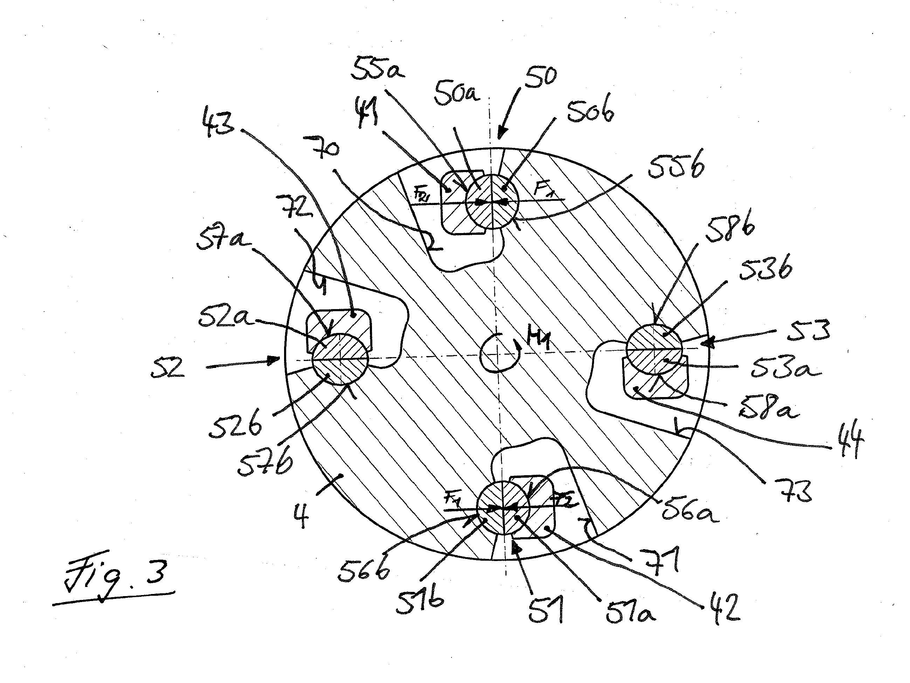

In dem dargestellten Ausführungsbeispiel dienen die Walzenpaare 50, 51 zur Mitnahme der Zylindertrommel 7 bei einer Drehung der Triebwelle 4 im Gegenuhrzeigersinn. In der Figur 3 sind für diese Drehrichtung der Triebwelle 4 die an den ebenen Gleitflächen GF der Halbwalzen 50a, 50b und 51 a, 51 b der Walzenpaare 50, 51 übertragenen Kräfte F1, F2, die das Mitnahmedrehmoment M2 zur Mitnahme der Zylindertrommel 7 erzeugen, dargestellt. Über die Triebwelle 4 wird das Drehmoment M1 und an den triebwellenseitigen Halbwalzen 50b, 51b die Kräfte F1 aufgebracht, die über die an den zylindertrommelseitigen Halbwalzen 50a, 51a auftretenden Kräfte F2 das Mitnahmedrehmoment M2 zur Mitnahme der Zylindertrommel 7 erzeugen.

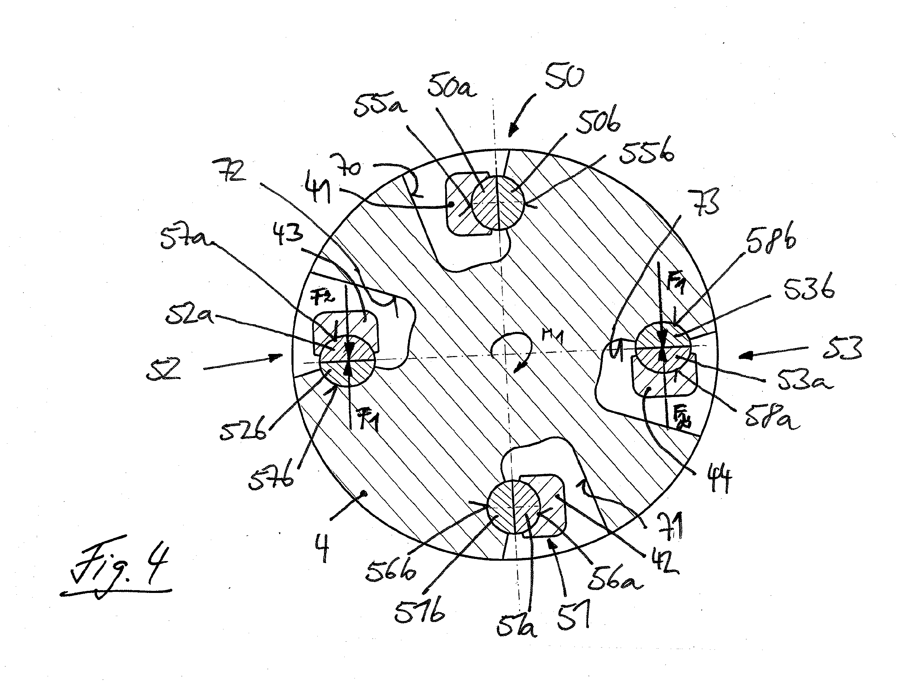

In dem dargestellten Ausführungsbeispiel dienen die Walzenpaare 52, 53 zur Mitnahme der Zylindertrommel 7 bei einer entgegengesetzten Drehung der Triebwelle 4 im Uhrzeigersinn. In der Figur 4 sind für diese Drehrichtung der Triebwelle 4 die an den ebenen Gleitflächen GF der Halbwalzen 52a, 52b und 53a, 53b der Walzenpaare 52, 53 aus dem an der Triebwelle 4 wirkendenden Drehmoment M1 übertragenen Kräfte F1, F2, die das Mitnahmedrehmoment M2 zur Mitnahme der Zylindertrommel 7 erzeugen, dargestellt. Über die Triebwelle 4 wird das Drehmoment M1 und an den triebwellenseitigen Halbwalzen 52b, 53b die Kräfte F1 aufgebracht, die über die an den zylindertrommelseitigen Halbwalzen 52a, 53a auftretenden Kräfte F2 das Mitnahmedrehmoment M2 zur Mitnahme der Zylindertrommel 7 erzeugen.

In dem dargestellten Ausführungsbeispiel sind für jede Drehrichtung jeweils zwei Walzenpaare 50, 51 bzw. 52, 53 vorgesehen, wobei die Walzenpaare 50, 51 für die erste Drehrichtung und die Walzenpaare 52, 53 für die zweite Drehrichtung über den Umfang gleichmäßig verteilt sind. Hierdurch kann ein radialer Kraftausgleich erzielt werden. In dem dargestellten Ausführungsbeispiel mit zwei Walzenpaaren pro Drehrichtung sind die Walzenpaare 50, 51 um einen Drehwinkel von 180° versetzt angeordnet und die Walzenpaare 52, 53 um einen Drehwinkel von 180° versetzt angeordnet. Die Walzenpaare 50, 51 für die erste Drehrichtung sind zu den Walzenpaaren 52, 53 für die zweite Drehrichtung um einen Drehwinkel von 90° versetzt.

In dem dargestellten Ausführungsbeispiel sind die triebwellenseitigen Aufnahmen 55b, 56b, 57b, 58b für die triebwellenseitigen Halbwalzen 50b, 51 b, 52b, 53b in der Triebwelle 4 ausgebildet. Im Bereich des kugelförmigen Abschnitts 26 ist die Triebwelle 4 hierzu mit taschenförmigen Ausnehmung 70, 71, 72, 73 versehen, an deren Seitenflächen jeweils eine triebwellenseitigen Aufnahme 55b, 56b, 57b, 58b ausgebildet ist.

In dem dargestellten Ausführungsbeispiel sind die zylindertrommelseitigen Aufnahmen 55a, 56a, 57a, 58a für die zylindertrommelseitigen Halbwalzen 50a, 51 a, 52a, 53a in dem hülsenförmigen Mitnehmerelement 40 ausgebildet. Das hülsenförmige Mitnehmerelement 40 ist hierzu mit fingerförmigen Erhebungen 41, 42, 43, 44 versehen ist, die sich in Richtung zur Triebwelle 4 erstrecken und in denen jeweils eine zylindertrommelseitige Aufnahme 55a, 56a, 57, 58a ausgebildet ist. Das hülsenförmige Mitnehmerelement 40 ist weiterhin mit dem hohlkugelförmigen Abschnitt 27 der kugelförmigen Führung 25 versehen.

Jede fingerförmige Erhebung 41, 42, 43, 44 des Mitnehmerelements 40 greift hierbei in eine zugeordnete taschenförmigen Ausnehmung 70, 71, 72, 73 der Triebwelle 4 ein.

Bei der Axialkolbenmaschine 1 der Figur 1 sind die Walzenpaare 50-53 des Kegelstrahl-Halbwalzengelenks 31 in Längsrichtung der Zylindertrommel 7 gesehen außerhalb der Zylindertrommel 7 angeordnet.

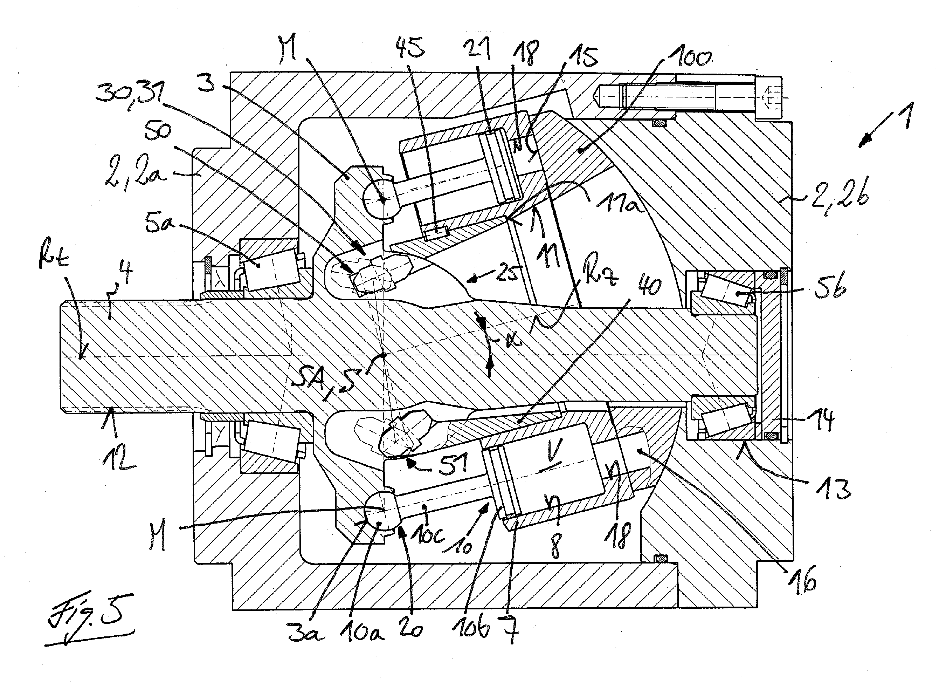

In den Figuren 5 bis 7 sind weitere Ausführungsformen einer erfindungsgemäßen Axialkolbenmaschine in Schrägachsenbauweise dargestellt, wobei mit der Figur 1 identische Bauteile mit identischen Bezugsziffern versehen sind. Die in den Figuren 5 bis 7 dargestellten Ausführungsformen sind hinsichtlich der Ausführung des Kegelstrahl-Halbwalzengelenk 31 zur Mitnahme der Zylindertrommel 7 mit den Figuren 1 bis 4 und 8 bis 13 identisch.

Die Axialkolbenmaschine 1 der Figur 5 ist als Verstellmaschine mit einem veränderbaren Verdrängervolumen ausgebildet. Bei der Verstellmaschine ist der Neigungswinkel α der Rotationsachse R_{z} der Zylindertrommel 7 bezüglich der Rotationsachse Rₜ der Triebwelle 4 zur Veränderung des Verdrängervolumens verstellbar. Die Steuerfläche 15, an der die Zylindertrommel 7 anliegt, ist hierzu an einem Wiegenkörper 100 ausgebildet, der im Gehäuse 2 um eine Schwenkachse SA verschwenkbar angeordnet ist. Die Schwenkachse SA des Wiegenkörpers 100 und somit der Zylindertrommel 7 liegt auf dem Schnittpunkt S der Rotationsachse Rₜ der Triebwelle 4 und der Rotationsachse R_{z} der Zylindertrommel 7 und ist senkrecht zu den Rotationsachsen Rₜ und R_{z}.

Je nach Stellung des Wiegenkörpers 100 ändert sich der Neigungswinkel α der Rotationsachse R_{z} der Zylindertrommel 7 zur Rotationsachse Rₜ der Triebwelle 4. Die Zylindertrommel 7 kann in eine Nullstellung verschwenkt werden, in der die Rotationsachse R_{z} der Zylindertrommel 7 koaxial zur Rotationsachse Rₜ der Triebwelle 4 ist. Ausgehend von dieser Nullstellung kann die Zylindertrommel 7 zu einer oder zu beiden Seiten verschränkt werden, so dass die Axialkolbenmaschine der Figur 5 als einseitig verschwenkbare oder als zweiseitig verschwenkbare Verstellmaschine ausgeführt werden kann. Eine Einrichtung zum Verschwenken des Wiegenkörpers 100 und somit der Zylindertrommel 7 ist in der Figur 5 nicht näher dargestellt.

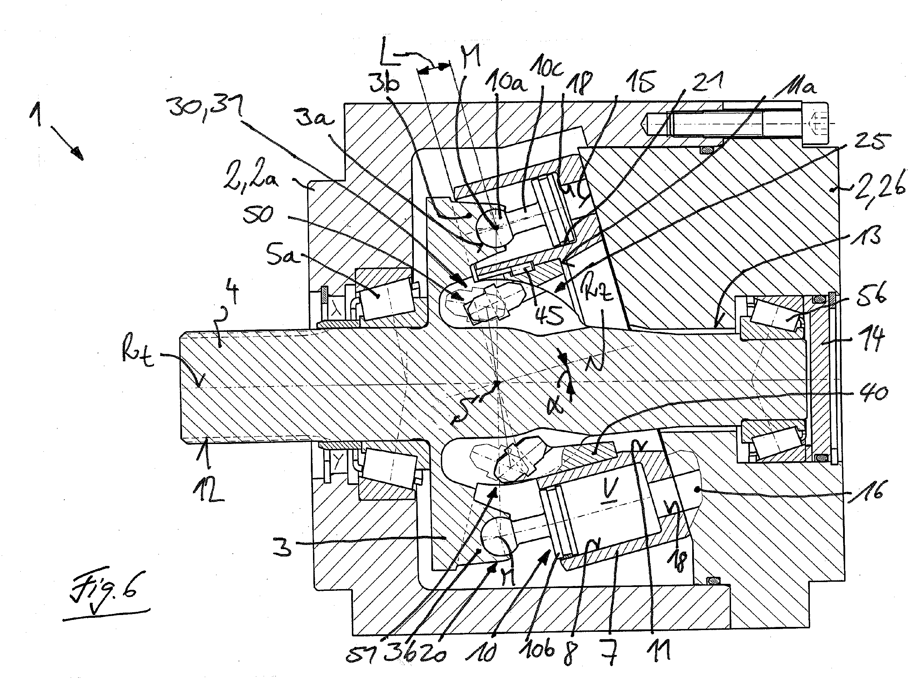

In der Figur 6 ist eine Ausführungsform der Axialkolbenmaschine 1 dargestellt, bei der die Mittelpunkte M der Gelenkverbindungen 20 der Kolben 120 mit dem Triebflansch 4 in Längsrichtung der Zylindertrommel 7 zumindest teilweise innerhalb der Zylindertrommel 7 angeordnet sind. Die Mittelpunkte M der Gelenkverbindungen 20 sind bei Rotation der Zylindertrommel 7 zumindest teilweise innerhalb der Längserstreckung der Zylindertrommel 7 angeordnet. In der Figur 6 ist an dem in der Figur 6 oberen Kolben 10, der sich an dem oberen Totpunkt befindet, ein Maß L verdeutlicht, um das die Mittelpunkte M der Gelenkverbindungen 20 in die Kolbenausnehmungen 8 der Zylindertrommel 7 hineinragen. Hierzu sind auf der der Zylindertrommel 7 zugewandten Stirnseite des Triebflansches 3 fingerförmige Erhöhungen 3b ausgebildet, an deren Enden die Kugelkalotten 3a der Gelenkverbindungen 20 angeordnet sind.

Die Walzenpaare 50-53 des Kegelstrahl-Halbwalzengelenks 31 sind bei der Figur 6 in Längsrichtung der Zylindertrommel 7 gesehen zumindest teilweise innerhalb der Zylindertrommel 7 angeordnet.

Die Ausführung der Figur 6 ermöglicht eine in Längsrichtung der Triebwelle 4 kompakte Ausführung der Axialkolbenmaschine 1. Weiterhin entsteht zwischen der Triebwelle 4 und der Zylindertrommel 7 ein größerer Freiraum. Dieser vergrößerte Freiraum kann zur Vergrößerung des Schwenkwinkels α der Zylindertrommel 7 und somit zu einer Erhöhung der Leistungsdichte der Axialkolbenmaschine 1 und/oder zur Vergrößerung des Durchmessers der Triebwelle 4 somit zur Erhöhung des Durchtriebsdrehmoments genutzt werden kann.

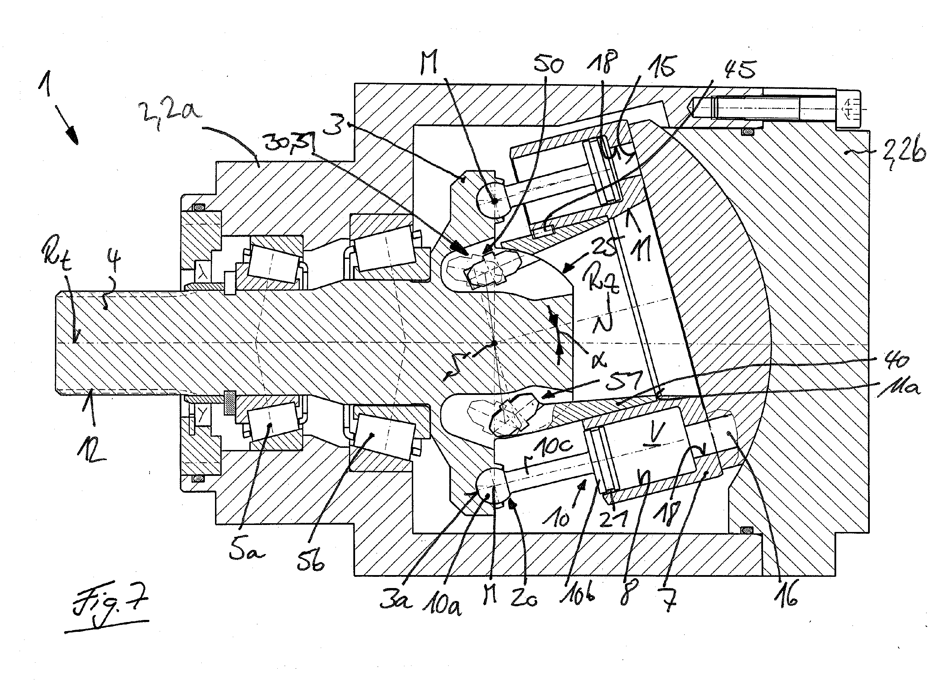

Bei der in der Figur 7 dargestellten Axialkolbenmaschine 1 ist anstelle der beidseitigen Lagerung der Triebwelle 4 im Gehäuse 2 gemäß den Figuren 1, 5 und 6 die mit dem Triebflansch 3 versehene Triebwelle 4 mittels der beiden Lager 5a, 5b einseitig und somit fliegend gelagert. Die Axialkolbenmaschine 1 der Figur 7 ist als Verstellmaschine ausgeführt. Es versteht sich, dass die Axialkolbenmaschine alternativ als Konstantmaschine ausgeführt werden kann. Bei der Ausführungsform der Figur 7 kann die Zylindertrommel 7 mit der zentralen Längsausnehmung 11 zur Durchführung der Triebwelle 4 versehen sein. Auf die zentrale Längsausnehmung 11 der Zylindertrommel 7 kann jedoch auch verzichtet werden.

Eine erfindungsgemäße Axialkolbenmaschine 1 mit einem als Kegelstrahl-Halbwalzengelenk 31 zur Mitnahme der Zylindertrommel 7 weist eine Reihe von Vorteilen auf.

Das Kegelstrahl-Halbwalzengelenk 31 kann durch entsprechende Wahl der Neigungswinkel γ der Rotationsachsen RR_{z}, RRₜ der Halbwalzen auf einfache Weise als homokinetisches Gleichlaufgelenk ausgeführt werden. Das erfindungsgemäße, als Gleichlaufgelenk ausgebildete Kegelstrahl-Halbwalzengelenk 31 ist für Axialkolbenmaschinen 1 mit einem konstanten oder einem verstellbaren Verdrängervolumen geeignet. Bei einer Verstellmaschine tritt beim Zurückschwenken der Zylindertrommel 7 auf ein verringertes Verdrängervolumen kein Losespiel auf. Zudem wird als wesentlicher Vorteil des Kegelstrahl-Halbwalzengelenk 31 ermöglicht, die Triebwelle 4 durch die Zylindertrommel 7 und die Axialkolbenmaschine 1 hindurchzuführen, um eine Durchtriebsmöglichkeit zu schaffen. Die Triebwelle 4 kann beidseitig der Zylindertrommel 7 im Gehäuse 2 gelagert werden, wodurch Vorteile hinsichtlich einer kompakten Bauweise der Axialkolbenmaschine 1 in axialer Richtung erzielt werden. Das Kegelstrahl-Halbwalzengelenk 31 weist eine Flächenberührung auf. Durch den Flächenkontakt an den ebenen Gleitflächen GF der beiden Halbwalzen eines Walzenpaares 51-53 treten lediglich geringe Hertzsche Pressungen auf, wodurch das erfindungsgemäße Kegelstrahl-Halbwalzengelenk 31 unempfindlich und robust gegen Überlast ist, die beispielsweise durch eine hohe Drehbeschleunigung entstehen kann. Das Kegelstrahl-Halbwalzengelenk 31 ist somit für eine Axialkolbenmaschine 1, bevorzugt einen Hydromotor, bei Anwendungen mit hohen Drehbeschleunigungen geeignet. Aufgrund der geringen auftretenden Belastungen durch den Flächenkontakt an den ebenen Gleitflächen GF der Halbwalzen ist an den Halbwalzen an den ebenen und abgeflachten Gleitflächen GF lediglich eine Oberflächenbehandlung hinsichtlich eines Verschleißschutzes erforderlich. Auf eine tiefe Aufhärtung der Halbwalzen kann verzichtet werden. Durch die begrenzte Oberflächenhärtung der Halbwalzen, die beispielsweise durch Nitrieren erzielt werden kann, tritt lediglich eine geringe Maßänderung der Halbwalzen auf, so dass auf eine mechanische Nachbearbeitung der Halbwalzen verzichtet werden kann. Der geringe Herstellaufwand für die Halbwalzen des Kegelstrahl-Halbwalzengelenks 31 führt zu einem geringen Bauaufwand für die erfindungsgemäße Axialkolbenmaschine 1.

Bei der erfindungsgemäßen Axialkolbenmaschine 1 sind die Funktion Drehmomentmitnahme der Zylindertrommel 7 durch das Kegelstrahl-Halbwalzengelenk 31 und die Funktion Lagerung der Zylindertrommel 7 durch die kugelförmige Führung 25 getrennt. Beide Funktionen sind durch die erforderlichen, geometrisch einfachen Flächen und Bauteile einfach und kostengünstig herzustellen. Insbesondere können die Aufnahmen für die Halbwalzen des Kegelstrahl-Halbwalzengelenks 31 und die Halbwalzen selbst auf einfache Weise und kostengünstig hergestellt werden.

Die Erfindung ist nicht auf die dargestellten Ausführungsbeispiele beschränkt. Die Ausführungsform der Figur 6 kann alternativ zu der dargestellten Ausführungsform als Konstantmaschine ebenfalls als Verstellmaschine ausgeführt werden. Bei der Ausführungsform der Figur 7 kann alternativ eine Anordnung und ein Eintauchen der Mittelpunkte M der Gelenkverbindungen 20 in die Kolbenausnehmung gemäß der Figur 6 verwirklicht werden. Zudem kann die Axialkolbenmaschine der Figuren 1, 5, 6 und 7 anstelle einer in beiden Drehrichtungen betreibbaren Axialkolbenmaschine1 lediglich in einer einzigen Drehrichtung betreibbar ausgeführt sein, wobei sich das Kegelstrahl-Halbwalzengelenk 31 entsprechend vereinfacht.

Das Kegelstrahl-Halbwalzengelenk 31 ist nicht auf die dargestellte Anzahl von Walzenpaaren beschränkt. Es versteht sich, dass für höhere zu übertragende Mitnahmedrehmomente M2 der Zylindertrommel 7 anstelle von zwei Walzenpaaren pro Drehrichtung eine höhere Anzahl von Walzenpaaren eingesetzt werden kann. Entsprechend kann für niedrigere zu übertragende Mitnahmedrehmomente M2 der Zylindertrommel 7 lediglich ein einzelnes Walzenpaar pro Drehrichtung vorgesehen werden.

Sofern die Axialkolbenmaschine lediglich in einer Drehrichtung betreibbar ist, sind entsprechend nur für die gewünschte Drehrichtung ein Walzenpaar oder mehrere Walzenpaare erforderlich, um das Mitnahmedrehmomente M2 der Zylindertrommel 7 übertragen zu können.

Die triebwellenseitigen Aufnahmen 55b, 56b, 57b, 58b für die Aufnahme und Abstützung der triebwellenseitigen Halbwalzen 50b, 51 b, 52b, 53b können alternativ zu einer Ausbildung in der Triebwelle 4 in dem Triebflansch 3 oder einem mit der Triebwelle 4 drehfest verbundenen Bauteil ausgebildet werden. Der Triebflansch 3 und die Triebwelle 4 können ebenfalls geteilt ausgeführt werden, wobei der Triebflansch 3 über ein geeignetes Drehmomentübertragungsmittel, beispielsweise eine Verzahnung, mit der Triebwelle 4 drehfest verbunden ist. Die triebwellenseitigen Aufnahmen 55b, 56b, 57b, 58b zur Bettung der triebwellenseitigen Halbwalzen 50b, 51 b, 52b, 53b können bei einer derartigen geteilten Ausführung der Triebwelle 4 und des Triebflansches 3 ebenfalls wahlweise in dem Triebflansch 3 oder der Triebwelle 4 angeordnet werden.

Die zylindertrommelseitigen Aufnahmen 55a, 56a, 57a, 58a für die Aufnahme und Abstützung der zylindertrommelseitigen Halbwalzen 50a, 51 a, 52a, 53a können alternativ zu der Ausbildung an dem hülsenförmigen Mitnehmerelement 40 direkt an der Zylindertrommel 7 ausgebildet werden, die hierzu bevorzugt mit den fingerförmigen Erhebungen 41, 42, 43, 44 versehen ist.

## Patentansprüche

1. Hydrostatische Axialkolbenmaschine (1) in Schrägachsenbauweise mit einer um eine Rotationsachse (Rₜ) drehbar angeordneten Triebwelle (4), die mit einem Triebflansch (3) versehen ist, und einer um eine Rotationsachse (R_{z}) drehbar angeordneten Zylindertrommel (7), wobei die Zylindertrommel (7) mit mehreren konzentrisch zur Rotationsachse (R_{z}) der Zylindertrommel (7) angeordneten Kolbenausnehmungen (8) versehen ist, in denen jeweils ein Kolben (10) längsverschiebbar angeordnet ist, wobei die Kolben (10) an dem Triebflansch (3) gelenkig befestigt sind, und wobei zwischen der Triebwelle (4) und der Zylindertrommel (7) ein Mitnahmegelenk (30) zur drehsynchronen Drehung der Zylindertrommel (7) und der Triebwelle (4) angeordnet ist, **dadurch gekennzeichnet, dass** das Mitnahmegelenk (30) als Kegelstrahl-Halbwalzengelenk (31) ausgebildet ist.

2. Hydrostatische Axialkolbenmaschine nach Anspruch 1, **dadurch gekennzeichnet, dass** das Kegelstrahl-Halbwalzengelenk (31) von zumindest einem Walzenpaar (50; 51; 52; 53) mit zwei halbzylindrischen Halbwalzen (50a, 50b; 51 a, 51b; 52a, 52b; 53a, 53b) gebildet ist, wobei die halbzylindrischen Halbwalzen (50a, 50b; 51 a, 51b; 52a, 52b; 53a, 53b) bis zu einer Rotationsachse (RRₜ; RR_{z}) abgeflacht sind und die Halbwalzen (50a, 50b; 51 a, 51b; 52a, 52b; 53a, 53b) an den abgeflachten Seiten ebene Gleitflächen (GF) bilden, an denen die Halbwalzen (50a, 50b; 51 a, 51b; 52a, 52b; 53a, 53b) des Walzenpaares (50; 51; 52; 53) unter Ausbildung einer Flächenberührung aneinanderliegen.

3. Hydrostatische Axialkolbenmaschine nach Anspruch 2, **dadurch gekennzeichnet, dass** die Halbwalzen (50a, 50b; 51 a, 51b; 52a, 52b; 53a, 53b) in radialer Richtung innerhalb der Kolben (10) und beabstandet von den Rotationsachsen (Rₜ, R_{z}) der Triebwelle (4) und der Zylindertrommel (7) angeordnet sind.

4. Hydrostatische Axialkolbenmaschine nach einem der Ansprüche 1 bis 3, **dadurch gekennzeichnet, dass** jedes Walzenpaar (50; 51; 52; 53) eine zu der Zylindertrommel (7) gehörige zylindertrommelseitige Halbwalze (50a; 51a; 52a; 53a) und eine zu der Triebwelle (4) gehörige triebwellenseitige Halbwalze (50b; 51b; 52b; 53b) aufweist.

5. Hydrostatische Axialkolbenmaschine nach Anspruch 4, **dadurch gekennzeichnet, dass** die zylindertrommelseitige Halbwalze (50a; 51 a; 52a; 53a) eines Walzenpaares (50; 51; 52; 53) in einer zylindrischen, insbesondere teilzylindrischen, zylindertrommelseitigen Aufnahme (55a; 56a; 57a; 58a) und die triebwellenseitige Halbwalze (50b; 51b; 52b; 53b) eines Walzenpaares (50; 51; 52; 53) in einer zylindrischen, insbesondere teilzylindrischen, triebwellenseitigen Aufnahme (55b; 56b; 57b; 58b) aufgenommen ist.

6. Hydrostatische Axialkolbenmaschine nach Anspruch 4 oder 5, **dadurch gekennzeichnet, dass** die Rotationsachse (RRₜ) der triebwellenseitigen Halbwalze (50b; 51b; 52b; 53b) zur Rotationsachse (Rₜ) der Triebwelle (4) um einen Neigungswinkel (γ) geneigt ist und die Rotationsachse (Rₜ) der Triebwelle (4) schneidet.

7. Hydrostatische Axialkolbenmaschine nach einem der Ansprüche 4 bis 6, **dadurch gekennzeichnet, dass** die Rotationsachse (RR_{z}) der zylindertrommelseitigen Halbwalze (50a; 51a; 52a; 53a) zur Rotationsachse (R_{z}) der Zylindertrommel (7) um einen Neigungswinkel (γ) geneigt ist und die Rotationsachse (R_{z}) der Zylindertrommel (7) schneidet.

8. Hydrostatische Axialkolbenmaschine nach Anspruch 6 oder 7, **dadurch gekennzeichnet, dass** die Neigungswinkel (γ) betragsmäßig identisch sind und sich die Rotationsachse (RR_{z}) der zylindertrommelseitigen Halbwalze (50a; 51 a; 52a; 53a) und die Rotationsachse (RRₜ) der triebwellenseitigen Halbwalze (50b; 51b; 52b; 53b) jedes Walzenpaares (50; 51; 52; 53) in einer Ebene (E) schneidet, die senkrecht zu der Winkelhalbierenden zwischen der Rotationsachse (Rₜ) der Triebwelle (4) und der Rotationsachse (R_{z}) der Zylindertrommel (7) ist, und die Halbwalzen (50a, 50b; 51a, 51b; 52a, 52b; 53a, 53b) eines Walzenpaars (50; 51; 52; 53) im Bereich des Schnittpunktes (SP) der Rotationsachsen (RR_{z}; RRₜ) der Halbwalzen (50a, 50b; 51a, 51b; 52a, 52b; 53a, 53b) angeordnet sind.

9. Hydrostatische Axialkolbenmaschine nach einem der Ansprüche 2 bis 8, **dadurch gekennzeichnet, dass** die Axialkolbenmaschine (1) in beide Rotationsrichtungen betreibbar ist, wobei für jede Drehrichtung jeweils zumindest ein Walzenpaar (50, 51; 52, 53) zur drehsynchronen Mitnahme der Zylindertrommel (7) vorgesehen ist.

10. Hydrostatische Axialkolbenmaschine nach einem der Ansprüche 2 bis 9, **dadurch gekennzeichnet, dass** über den Umfang mehrere Walzenpaare (50, 51, 52, 53), insbesondere mindestens zwei Walzenpaare, verteilt angeordnet sind.

11. Hydrostatische Axialkolbenmaschine nach einem der Ansprüche 2 bis 10, **dadurch gekennzeichnet, dass** das zumindest eine Walzenpaar (50; 51; 52; 53) in Längsrichtung der Zylindertrommel (7) außerhalb der Zylindertrommel (7) angeordnet ist.

12. Hydrostatische Axialkolbenmaschine nach einem der Ansprüche 2 bis 10, **dadurch gekennzeichnet, dass** das zumindest eine Walzenpaar (50; 51; 52; 53) in Längsrichtung der Zylindertrommel (7) zumindest teilweise innerhalb der Zylindertrommel (7) angeordnet ist.

13. Hydrostatische Axialkolbenmaschine nach einem der Ansprüche 5 bis 12, **dadurch gekennzeichnet, dass** die jeweilige in einer zylindrischen Aufnahme (55a; 55b; 56a; 56b; 57a; 57b; 58a; 58b) aufgenommene Halbwalze (50a, 50b; 51 a, 51b; 52a, 52b; 53a, 53b) in der Aufnahme (55a; 55b; 56a; 56b; 57a; 57b; 58a; 58b) in Längsrichtung der Rotationsachse (RRₜ; RR_{z}) der Halbwalze (50a, 50b; 51 a, 51b; 52a, 52b; 53a, 53b) gesichert ist.

14. Hydrostatische Axialkolbenmaschine nach Anspruch 13, **dadurch gekennzeichnet, dass** die Halbwalzen (50a, 50b; 51 a, 51b; 52a, 52b; 53a, 53b) am zylindrischen Abschnitt mit einem Bund (60) versehen sind, der in eine Nut (61) der Aufnahme (55a; 55b; 56a; 56b; 57a; 57b; 58a; 58b) eingreift.

15. Hydrostatische Axialkolbenmaschine nach einem der Ansprüche 5 bis 14, **dadurch gekennzeichnet, dass** die triebwellenseitige Aufnahme (55b; 56b; 57b; 58b) in der Triebwelle (4) oder in dem Triebflansch (3) ausgebildet ist.

16. Hydrostatische Axialkolbenmaschine nach einem der Ansprüche 5 bis 14, **dadurch gekennzeichnet, dass** die triebwellenseitige Aufnahme (55b; 56b; 57b; 58b) in einem mit der Triebwelle (4) drehfest verbundenen Bauteil ausgebildet ist.

17. Hydrostatische Axialkolbenmaschine nach einem der Ansprüche 1 bis 16, **dadurch gekennzeichnet, dass** der Triebflansch (3) an der Triebwelle (4) einstückig angeformt ist oder der Triebflansch (3) und die Triebwelle (4) geteilt ausgeführt sind, wobei der Triebflansch (3) mit der Triebwelle (4) drehmomentfest verbunden ist.

18. Hydrostatische Axialkolbenmaschine nach einem der Ansprüche 5 bis 17, **dadurch gekennzeichnet, dass** die zylindertrommelseitige Aufnahme (55a; 56a; 57a; 58a) in der Zylindertrommel (7) oder in einem hülsenförmigen Mitnehmerelement (40) angeordnet ist, das mit der Zylindertrommel (7) drehfest verbunden ist.

19. Hydrostatische Axialkolbenmaschine nach Anspruch 18, **dadurch gekennzeichnet, dass** das Mitnehmerelement (40) bzw. die Zylindertrommel (7) mit mindestens einer fingerförmigen Erhebung (41; 42; 43; 44) versehen ist, die sich in Richtung zur Triebwelle (4) erstreckt und in der jeweils eine zylindertrommelseitige Aufnahme (55a; 56a; 57a; 58a) für eine zylindertrommelseitige Halbwalze (50a; 51 a; 52a; 53a) ausgebildet ist.

20. Hydrostatische Axialkolbenmaschine nach Anspruch 19, **dadurch gekennzeichnet, dass** die Triebwelle (4) bzw. der Triebflansch (3) bzw. das mit der Triebwelle drehfest verbundenen Bauteil mit mindestens einer taschenförmigen Ausnehmung (70; 71; 72; 73) versehen ist, in die das Mitnehmerelement (40) bzw. die Zylindertrommel (7) mit jeweils einer fingerförmigen Erhebung (41; 42; 43; 44) eingreift, wobei in der taschenförmigen Ausnehmung (70; 71; 72; 73) jeweils eine triebwellenseitige Aufnahme (55b; 56b; 57b; 58b) für eine triebwellenseitige Halbwalze (50b; 51b; 52b; 53b) ausgebildet ist.

21. Hydrostatische Axialkolbenmaschine nach einem der Ansprüche 1 bis 20, **dadurch gekennzeichnet, dass** zwischen der Triebwelle (4) und der Zylindertrommel (7) eine kugelförmige Führung (25) ausgebildet ist.

22. Hydrostatische Axialkolbenmaschine nach einem der Ansprüche 1 bis 21, **dadurch gekennzeichnet, dass** die Zylindertrommel (7) mit einer konzentrisch zur Rotationachse (R_{z}) der Zylindertrommel (7) angeordneten Längsausnehmung (11) versehen ist, durch die sich die mit dem Triebflansch (3) versehene Triebwelle (4) durch die Zylindertrommel (7) hindurcherstreckt.

23. Hydrostatische Axialkolbenmaschine nach Anspruch 22, **dadurch gekennzeichnet, dass** das hülsenförmige Mitnehmerelement (40) in der Längsausnehmung (11) der Zylindertrommel (7) angeordnet ist.

24. Hydrostatische Axialkolbenmaschine nach einem der Ansprüche 1 bis 23, **dadurch gekennzeichnet, dass** die Triebwelle (4) an beiden Enden zur Drehmomentübertragung mit Drehmomentübertragungsmitteln (12) versehen ist.

25. Hydrostatische Axialkolbenmaschine nach einem der Ansprüche 1 bis 24, **dadurch gekennzeichnet, dass** die Triebwelle (4) als Hohlwelle ausgebildet ist, durch die eine die Axialkolbenmaschine (1) durchsetzende Durchtriebswelle hindurch geführt ist.

26. Hydrostatische Axialkolbenmaschine nach einem der Ansprüche 1 bis 25, **dadurch gekennzeichnet, dass** die Triebwelle (4) in einem Gehäuse (2) einseitig im Bereich des Triebflansches (3) gelagert ist.

27. Hydrostatische Axialkolbenmaschine nach einem der Ansprüche 1 bis 25, **dadurch gekennzeichnet, dass** die Triebwelle (4) in einem Gehäuse (2) beidseitig der Zylindertrommel (7) gelagert ist.

28. Hydrostatische Axialkolbenmaschine nach einem der Ansprüche 1 bis 27, **dadurch gekennzeichnet, dass** die Mittelpunkte (M) der Gelenkverbindungen (20) der Kolben (10) mit dem Triebflansch (3) in Längsrichtung der Zylindertrommel (7) außerhalb der Zylindertrommel (7) angeordnet sind.

29. Hydrostatische Axialkolbenmaschine nach einem der Ansprüche 1 bis 27, **dadurch gekennzeichnet, dass** die Mittelpunkte (M) der Gelenkverbindungen (20) der Kolben (10) mit dem Triebflansch (3) in Längsrichtung der Zylindertrommel (7) zumindest teilweise innerhalb der Zylindertrommel (7) angeordnet sind.

30. Hydrostatische Axialkolbenmaschine nach einem der Ansprüche 1 bis 29, **dadurch gekennzeichnet, dass** die Axialkolbenmaschine (1) als Konstantmaschine mit einem festen Verdrängervolumen ausgebildet ist.

31. Hydrostatische Axialkolbenmaschine nach einem der Ansprüche 1 bis 29, **dadurch gekennzeichnet, dass** die Axialkolbenmaschine (1) als Verstellmaschine mit einem veränderbaren Verdrängervolumen ausgebildet ist, wobei die Neigung der Rotationachse (R_{z}) der Zylindertrommel (7) bezüglich der Rotationsachse (Rₜ) der Triebwelle (4) veränderbar ist.
